# EUROPEAN PATENT APPLICATION

(11) **EP 4 708 182 A1**
(43) Date of publication of application: **11.03.2026**
(21) Application number: 25185911.2
(22) Date of filing: 27.06.2025
(51) Int. Cl.: G06Q 30/0601

(54) **OBJECT PROCESSING METHOD, PRODUCT INFORMATION METHOD, COMPUTING DEVICE, STORAGE MEDIUM, AND PROGRAM PRODUCT**

(30) Priority: 04.09.2024 CN 202411240739
(71) Applicant: Hangzhou Alibaba International Internet Industry Co., Ltd., Hangzhou City, Zhejiang Province (CN)
(72) Inventor: JIANG, Jianming, Hangzhou City (CN); ZHANG, Guannan, Hangzhou City (CN); CHENG, Yaping, Hangzhou City (CN)
(74) Representative: Wu, Ting

(57) **Abstract**

An object processing method, a product information comparison method, a computing device, a storage medium, a program product device, and a mobile terminal are provided. By providing a user interface and displaying search prompt information on the user interface, a search instruction is generated according to search information provided by a user, and object information corresponding to multiple first objects matching the search information is obtained from at least one object provision system based on the search instruction, and object prompt information is generated based on the object information. The object prompt information corresponding to the multiple first objects is displayed on the user interface, and a first comparison instruction is generated according to multiple target objects selected by the user, to generate comparison information by comparing object information of the multiple target objects based on the first comparison instruction. The comparison information is displayed on the user interface.

## Description

### Cross Reference to Related Patent Applications

This application is related to and claims priority to Chinese Application No. 202411240739.X, filed on 4 September 2024 and entitled "Object Processing Method, Product Information Method, Computing Device, Storage Medium, and Program Product".

### Technical Field

The present disclosure relates to the field of electronic technologies, and in particular to object processing methods, product information methods, computing devices, storage media, and program products.

### Background

The development of electronic technologies and network technologies has led to an increasing number of systems that provide objects for users to interact with. In order to facilitate users to understand objects and interact with objects, these object provision systems often provide object information for each object so that the users can decide whether to perform interactive behaviors on the objects by browsing the object information.

In practical applications, a same object provider may publish a same object in different object provision systems, or different object providers may publish similar objects in object provision systems. An object provision system can also provide a search function for a user to search for objects based on a search keyword, and search results will also include multiple objects hit by the search keyword. In these usage scenarios, a user may need to view object information of different objects for manual comparison before deciding on an object to be interacted finally. Such comparison operation is cumbersome, inefficient, and has a poor user experience.

### Summary

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter. The term "techniques," for instance, may refer to device(s), system(s), method(s) and/or processor-readable/computer-readable instructions as permitted by the context above and throughout the present disclosure.

Embodiments of the present disclosure provide an object processing method, a product information comparison method, a computing device, a storage medium, and a program product to solve technical problems of low efficiency of comparison and poor user experience in existing technologies.

The embodiments of the present disclosure provide an object processing method, which includes:
providing a user interface and displaying search prompt information on the user interface;
generating a search instruction according to search information provided by a user, so as to obtain object information corresponding to multiple first objects matching the search information from at least one object provision system based on the search instruction, and generating respective object prompt information based on the object information;
displaying the respective object prompt information corresponding to the multiple first objects on the user interface;
generating a first comparison instruction according to multiple target objects selected by the user, so as to compare object information of the multiple target objects based on a first comparison instruction to generate comparison information; and
displaying the comparison information on the user interface.

The embodiments of the present disclosure provide an object processing method, which includes:
obtaining search information provided by a user;
obtaining object information corresponding to multiple first objects matching the search information from at least one object provision system, and generating respective object prompt information based on the object information;
sending the respective object prompt information corresponding to the multiple first objects to a user;
determining multiple target objects selected by the user; and
comparing object information of the multiple target objects to generate comparison information.

The embodiments of the present disclosure provide a product information comparison method, which includes:
providing a user interface and displaying search prompt information on the user interface;
generating a search instruction according to search information provided by a user, so as to obtain respective product information corresponding to multiple first products matching the search information from at least one e-commerce system based on the search instruction, and generating product prompt information based on the product information;
displaying the respective product prompt information corresponding to the multiple first products on the user interface;
generating a first comparison instruction according to multiple target products selected by the user, so as to compare product information of the multiple target products based on the first comparison instruction to generate comparison information; and
displaying the comparison information on the user interface.

The embodiments of the present disclosure provide a method for comparing product information, which includes:
obtaining search information provided by a user.
obtaining respective product information corresponding to multiple first products that match the search information from at least one e-commerce system, and generating respective product prompt information based on the product information;
sending the respective product prompt information corresponding to the multiple first products to the user;
determining multiple target products selected by the user; and
comparing product information of the multiple target products to generate comparison information.

The embodiments of the present disclosure provide a computing device, which includes a processing component and a storage component, wherein:
the storage component stores one or more computer instructions; the one or more computer instructions are configured to be called and executed by the processing component to implement the object processing method described in the first aspect above, the object processing method described in the second aspect above, the product information comparison method described in the third aspect above, or the product information comparison method described in the fourth aspect above.

The embodiments of the present disclosure provide a computer-readable storage medium, on which a computer program is stored, and when the computer program is executed by the processing component, the object processing method described in the first aspect above, the object processing method described in the second aspect above, the product information comparison method described in the third aspect above, the product information comparison method described in the fourth aspect above is implemented.

The embodiments of the present disclosure provide a computer program product, which includes a computer program/instructions. When the computer program/instructions is/are executed by a processing component, the object processing method described in the first aspect, the object processing method described in the second aspect, the product information comparison method described in the third aspect, or the product information comparison method described in the fourth aspect is implemented.

In the embodiments of the present disclosure, by providing a user interface and displaying search prompt information, a user can provide search information, so that respective object information corresponding to multiple first objects matching the search information can be obtained from at least one object provision system based on the search information, and respective object prompt information is generated based on the respective object information. By displaying the respective object prompt information corresponding to the multiple first objects in the user interface for user selection, comparison information can be automatically generated based on the object information according to selected multiple target objects, and the comparison information is displayed in the user interface. As such, the user only needs to provide the search information to intuitively obtain comparison information of multiple target objects matching the search intention, and the user does not need to compare one by one, thereby simplifying the comparison operation, improving the efficiency of comparison, and improving the user experience.

These aspects or other aspects of the present disclosure will be more concise and easy to understand in the description of the following embodiments.

### Brief Description of the Drawings

In order to more clearly illustrate the technical solutions in the embodiments of the present disclosure, drawings used for describing the embodiments or existing technologies are briefly described as follows. Apparently, the drawings described below are some embodiments of the present disclosure. For one of ordinary skill in the art, other drawings can also be obtained based on these drawings without making creative effort.
FIG. 1 shows a flowchart of an exemplary object processing method provided by the present disclosure.
FIGS. 2a-2f respectively show schematic diagrams of interface displays in an actual application according to the embodiments of the present disclosure.
FIG. 3 shows a flowchart of another exemplary object processing method provided by the present disclosure.
FIG. 4 shows a flowchart of an embodiment of an exemplary product information comparison method provided by the present disclosure.
FIG. 5 shows a flowchart of another exemplary product information comparison method provided by the present disclosure.
FIG. 6 shows a schematic diagram of scene interactions implemented in an actual application of the present disclosure.
FIG. 7 shows a structural schematic diagram of an exemplary object processing apparatus provided by the present disclosure.
FIG. 8 shows a structural schematic diagram of another exemplary object processing apparatus provided by the present disclosure.
FIG. 9 shows a structural schematic diagram of an exemplary computing device provided by the present disclosure.

### Detailed Description

In order to enable one skilled in the art to better understand the solutions of the present disclosure, the technical solutions in the embodiments of the present disclosure will be clearly and completely described below in conjunction with the drawings in the embodiments of the present disclosure.

In some processes described in the specification and claims of the present disclosure and the above drawings, multiple operations appearing in a specific order are included. However, it should be clearly understood that these operations may not be executed in an order in which they appear in this text, or may be executed in parallel. Serial numbers of operations, such as 101, 102, etc., are only used to distinguish different operations, and the serial numbers themselves do not represent any execution order. In addition, these processes may include more or fewer operations, and these operations may be executed in sequence or in parallel. It should be noted that descriptions such as "first", "second", etc. in this text are used to distinguish different messages, devices, modules, etc., and do not represent an order of precedence, and "first" and "second" are not limited to different types.

The technical solutions of the embodiments of the present disclosure can be applied to object interaction scenarios, providing an efficient and portable comparison solution for objects provided by object provision systems. An object provision system is an online system that provides objects for users to interact with. Object providers can publish objects and provide object information in the object provision system for users to view and decide whether to perform interactive behaviors. For example, in an e-commerce scenario, the object provision system is also an e-commerce system. The e-commerce system can provide products for users to purchase, etc. Merchants can publish products and provide product information in the e-commerce system, and the users can decide whether to purchase products based on the product information.

Users may need to view object information of different objects provided by different object provision systems and manually compare them before deciding on an object to be interacted finally. Although some tools such as Excel tables (a kind of electronic spreadsheet) can be used, users still need to record object information of different objects one by one and then compare them. Such comparison operation is cumbersome, the efficiency is relatively low, and the user experience is poor.

In order to improve the efficiency of comparison, simplify comparison operations, and improve the user experience, the inventors have proposed technical solutions of the embodiments of the present disclosure after a series of studies. The technical solutions of the embodiments of the present disclosure provide an object processing system. By providing a user interface and displaying search prompt information, a user can provide search information, so that respective object information corresponding to multiple first objects matching the search information can be obtained from at least one object provision system based on the search information, and respective object prompt information is generated based on the respective object information. By displaying the respective object prompt information corresponding to the multiple first objects in the user interface for user selection, comparison information can be automatically generated based on the object information according to selected multiple target objects, and the comparison information is displayed in the user interface. As such, the user only needs to provide the search information to intuitively obtain the comparison information of multiple target objects matching the search intention, and the user does not need to compare one by one, thereby simplifying comparison operations, improving the efficiency of comparison, and improving the user experience.

It should be noted that the embodiments of the present disclosure may involve the use of user data. In actual applications, user-specific personal data can be used in the solutions described herein within the scope permitted by applicable laws and regulations in accordance with the applicable laws and regulations of the country (for example, the user's explicit consent, the user is effectively notified, etc.).

It should be noted that user information (including but not limited to user device information, user personal information, etc.) and data (including but not limited to data for analysis, stored data, displayed data, etc.) involved in the present disclosure are all information and data authorized by users or fully authorized by all parties. The collection, use and processing of relevant data need to comply with relevant laws, regulations and standards of relevant countries and regions, and provide corresponding operation portals for the users to choose to authorize or refuse.

It should be noted that the technical solutions of the embodiments of the present disclosure are applicable to network virtual environments. Users, object providers, etc., that are described generally refer to "virtual users". Real users can register accounts in a server through registration to obtain identity information in a network environment, and apparently can also conduct network activities as visitors (unregistered or unlogged accounts). The present disclosure does not have any limitation thereon.

The technical solutions in the embodiments of the present disclosure will be clearly and completely described in conjunction with the drawings in the embodiments of the present disclosure. Apparently, the described embodiments represent only some and not all of the embodiments of the present disclosure. Based on the embodiments in the present disclosure, all other embodiments obtained by one skilled in the art without making any creative effort are within the scope of protection of the present disclosure.

The technical solutions of the embodiments of the present disclosure can be applied to an object processing system composed of a client and a server.

A connection can be established between the client and the server through a network. The network provides a medium for a communication link between the client and the server. The network can include various connection types, such as wired, wireless communication links or optical fiber cables, etc.

The client can interact with the server through the network to receive or send messages, etc.

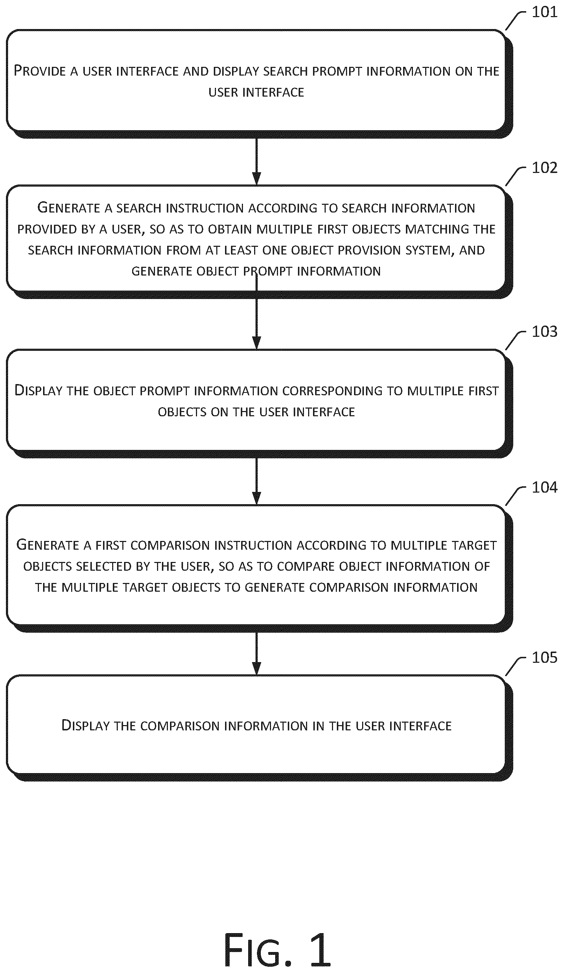

In the embodiments of the present disclosure, the client can be a browser, an APP (Application), a web application such as H5 (HyperText Markup Language5, Hypertext Markup Language Version 5) application, a light application (also known as a mini program, a lightweight application), or a cloud application, etc. The user terminal 101 can be deployed in an electronic device and needs to rely on the device to run or some apps in the device to run, etc. The electronic device can, for example, have a display screen and support information browsing, etc., such as a personal mobile terminal (such as a mobile phone, a tablet computer, a personal computer, a desktop computer, a smart speaker, a smart watch, etc.). For ease of understanding, FIG. 1 mainly represents the user terminal with a form of device. Various other types of applications can usually be configured in electronic devices, such as human-computer dialogue applications, model training applications, text processing applications, web browser applications, shopping applications, search applications, instant messaging tools, email clients, social platform software, etc. The electronic device can refer to a device used by a user, which has functions of computing, surfing the Internet, communicating, etc. required by the user, such as a mobile phone, a tablet computer, a personal computer, a wearable device, etc. The electronic device can usually include at least one processing component and at least one storage component. The electronic device may also include a basic configuration such as a network card chip, an IO bus, an audio and video component, which are not limited in the present disclosure. Optionally, according to an implementation form of the electronic device, some peripheral devices such as a keyboard, s mice, an input pen, a printer, etc. may also be included, which are not limited in the present disclosure.

The server may include a server that provides various services, such as a server for background training that support models used on the client, and a server that processes interactive information sent by the client, etc.

It should be noted that the server can be implemented as a distributed server cluster including multiple servers, or as a single server. The server can also be a server of a distributed system, or a server combined with a blockchain. The server may also be a cloud server that provides basic cloud computing services such as cloud services, cloud databases, cloud computing, cloud functions, cloud storage, network services, cloud communications, middleware services, domain name services, security services, content delivery networks (CDN), and big data and artificial intelligence platforms, or an intelligent cloud computing server or intelligent cloud host with artificial intelligence technology.

The object processing system of the embodiments of the present disclosure can provide a user interface through a client for a user to interact, etc. In addition, the object processing system can also be integrated in any object provision system, and the above-mentioned server can be implemented as a server of the object provision system, etc. Apparently, the object processing system can be used as an independent system, and object information can be obtained from an object provision system through network crawling technology or through corresponding interfaces under authorization of the object provision system, etc. The present disclosure does not have any limitations thereon.

The details of implementation of the technical solutions of the embodiments of the present disclosure will be described in detail below.

FIG. 1 is a flowchart of an exemplary object processing method provided in the embodiments of the present disclosure. The technical solution of this embodiment can be executed by a client in the object processing system shown in FIG. 1. The method may include the following steps:
101: Provide a user interface and display search prompt information on the user interface.
102: Generate a search instruction according to search information provided by a user, so as to obtain respective object information corresponding to multiple first objects matching the search information from at least one object provision system based on the search instruction, and generate respective object prompt information based on the object information.

The search prompt information can be used to prompt the user to provide search information. The search prompt information can include, for example, an input control used for sensing a user input operation and obtain search information, so that a search instruction can be generated based on the search information. In addition, the search prompt information can also include a search control, and a search instruction can be specifically generated based on search information input by a user in response to the user's triggering operation on the search control.

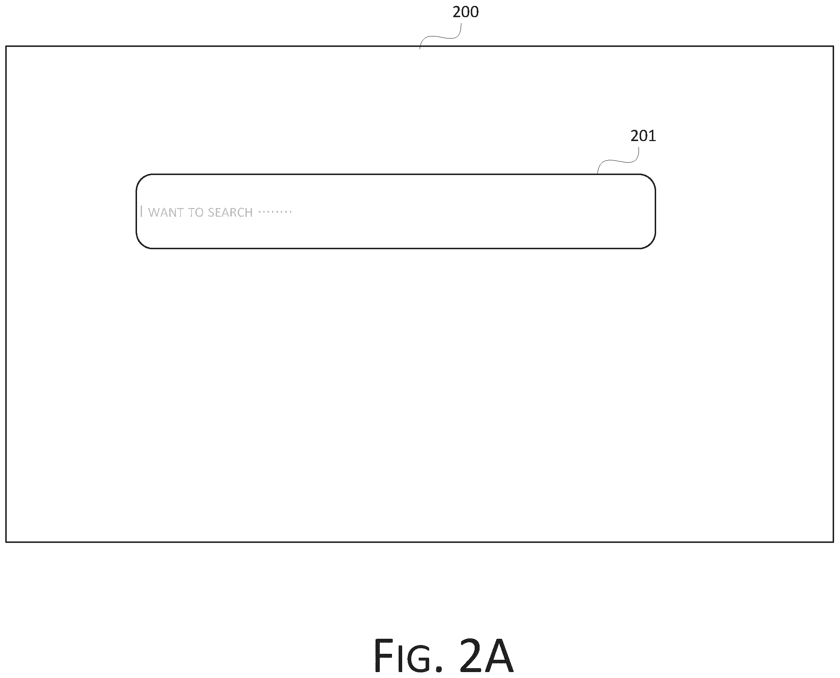

For ease of understanding, in a schematic diagram of an interface as shown in FIG. 2a, a user interface 200 may present search prompt information 201.

The search information may be in a media format such as text, image and/or audio, which is not limited in the present disclosure.

A search operation may be performed through a network crawling technology to obtain object information of first object(s) matching search information from at least one object provision system. Apparently, under authorization of any object provision system, a search operation may also be performed from the object provision system through a corresponding interface to obtain object information of first object(s) matching search information, etc., which is not limited in the present disclosure.

A search operation may be performed by the client in response to a search instruction, or the client may send the search instruction to the server, and the server may perform the search operation. In this case, step 102 may be to generate a search instruction according to search information provided by a user, and send the search instruction to the server, so that the server can obtain respective object information corresponding to multiple first objects matching the search information from at least one object provision system, and generate object prompt information based on the object information.

In the embodiments of the present disclosure, object prompt information can be generated based on object information. The object information may include detailed description of an object, and may include feature data corresponding to multiple feature attributes of the object, such as a specification, an origin, a title, a brand, a price, logistics information, object provider information such as an object provider name, an address, etc.

The object prompt information can be generated based on the object information, and for example, may include an object picture, summary information generated based on the object information, or one or more of feature data of at least one feature attribute. Specific information types to be included can be determined based on actual conditions.

103: Display the respective object prompt information corresponding to multiple first objects on the user interface.

104: Generate a first comparison instruction according to multiple target objects selected by the user, so as to compare object information of the multiple target objects based on the first comparison instruction to generate comparison information.

Optionally, the multiple target objects selected by the user may be determined in response to a first object selection operation.

The object prompt information may be in a form of a card control so as to perceive a first object selection operation of the user. Apparently, the object prompt information may also be implemented in other forms, and each object prompt information may include a selection control for the user to perform a first object selection operation. The selected first object can be used as a target object, and object prompt information corresponding to the target object can display predetermined mark information to indicate that it is selected, etc. For example, when the object prompt information is a card control, the border of the card control corresponding to the target object can be updated to a predetermined color or switched to a predetermined line, etc.

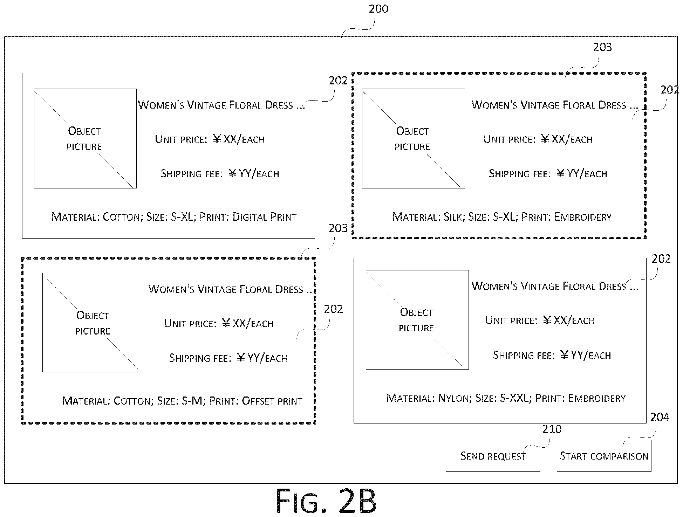

For ease of understanding, in a schematic diagram of an interface as shown in FIG. 2b, the user interface 200 displays respective object prompt information 202 corresponding to multiple first objects, and the object prompt information can be a card control. The object prompt information of a selected target object can display predetermined mark information 203 to prompt the user that the selection is successful, etc.

A first comparison instruction can be generated according to multiple target objects selected by the user, and the client can respond to the first comparison instruction to compare object information of the multiple target objects to generate comparison information. Apparently, the first comparison instruction can also be sent to the server, so that the server can compare the object information of the multiple target objects to generate the comparison information, and return the comparison information to the client.

Optionally, according to the multiple target objects selected by the user, comparison prompt information can be displayed in the user interface, such as comparison prompt information 204 shown in FIG. 2b. A first comparison instruction can be generated for a first comparison operation triggered by the comparison prompt information 204, etc.

In addition, in an object provision system, object information is often carried in an object page, and the object page corresponds to an object link for indexing to the object page. Optionally, object prompt information of each first object can also correspond to an object link, so that an object viewing operation triggered by the object prompt information can be transferred to the object page based on the corresponding object link to display the object information. The object selection operation and the object viewing operation can be different user interaction operations for distinction, such as the object selection operation can be a "single click" operation, and the object viewing operation can be a "double click" operation, etc., which can be set in combination with actual conditions. The present disclosure does not have limitations therein.

105: Display the comparison information in the user interface.

By displaying the comparison information in the user interface, the user can intuitively view the differences between different target objects, etc.

In this embodiment, a user only needs to provide search information to intuitively obtain comparison information of multiple target objects matching a search intention, and the user does not need to compare one by one, thereby simplifying comparison operations, improving the efficiency of comparison, and improving the user experience.

Since the object information can include feature data corresponding to multiple attribute features, as an optional method, the comparison information of each target object can include feature data corresponding to at least one first feature attribute of the target object.

Therefore, generating the first comparison instruction according to the multiple target objects selected by the user, and comparing the object information of the multiple target objects based on the first comparison instruction to generate the comparison information may include:
generating a first comparison instruction according to the multiple target objects selected by the user, obtaining respective feature data of at least one first attribute feature corresponding to the multiple target objects based on the first comparison instruction, and using the respective feature data of the at least one first attribute feature corresponding to the multiple target objects as the comparison information.

Then, displaying the comparison information on the user interface may include: displaying the respective feature data of the at least one first attribute feature corresponding to the multiple target objects on the user interface.

The at least one first attribute feature can be pre-set in combination with an object category or user preference category of the target object. For example, in a cross-border e-commerce scenario, the object is a product, and the object provider is a merchant. In a B2B (Business-to-Business) cross-border e-commerce scenario, the user is a seller and the merchant is a supplier. The at least one first attribute feature can include, for example, a unit price, a minimum sales quantity, a logistics cost, a logistics time, a supplier's name, a supplier's level, an average response time, etc., and can also include specific attribute features corresponding to a product category. For example, when the product is a car, the at least one first attribute feature can also include a power source, etc.

In addition, the comparison information can also include an object picture and/or an object name of the target object, etc., to distinguish or identify the target object, etc.

As another optional method, in addition to including the feature data corresponding to the at least one first attribute feature of the target object in the comparison information of each target object, in order to facilitate users to quickly understand the target objects and the difference information between different target objects, etc., the comparison information can also include an evaluation result of any target object generated by using a large model based on the respective feature data corresponding to the at least one first attribute feature of multiple target objects. Therefore, generating the first comparison instruction according to the multiple target objects selected by the user, and comparing the object information of the multiple target objects based on the first comparison instruction to generate the comparison information may include:
generating the first comparison instruction according to the multiple target objects selected by the user, obtaining respective feature data of at least one first attribute feature corresponding to the multiple target objects based on the first comparison instruction, and generating an evaluation result of any target object based on the respective feature data of at least one first attribute feature corresponding to the multiple target objects using a large model, and using the respective feature data corresponding to at least one first attribute feature of the multiple target objects and the evaluation result as the comparison information.

Displaying the comparison information on the user interface may include: displaying the respective feature data of the at least one first attribute feature corresponding to the multiple target objects and respective evaluation results corresponding thereto on the user interface.

Optionally, feature data of at least one first attribute feature of each target object may be input into the large model, so as to generate an evaluation result of each target object using the large model.

An evaluation result may include, for example, advantage information and/or disadvantage information of an associated target object, etc., to reflect the advantages and disadvantages of the target object. For example, the evaluation result may be "support customization, provide overseas after-sales service but do not provide free logistics service", etc.

In addition, the respective feature data of at least the one first attribute feature corresponding to the multiple target objects can also be input into the large model, so as to generate an evaluation result of each target object using the respective feature data of the at least one first attribute feature corresponding to the multiple target objects with the large model.

An evaluation result can include advantage information and/or disadvantage information of one target object relative to other target objects, so as to reflect the advantages and disadvantages of the target object. For example, the evaluation result can be "the price is more favorable but the logistics delivery time is longer".

In addition, the comparison information can also include an object picture and/or an object name of the target object, so as to distinguish or identify the target object, etc.

As another optional method, when the comparison information includes feature data of at least one first attribute feature. In actual applications, especially in B2B e-commerce scenarios, users, that is, sellers, often pay attention to profit. Therefore, the at least one first attribute feature can include cost features, and feature data of cost features can be cost profits generated according to respective sales prices and respective supply prices corresponding to the multiple target objects. Therefore, generating the first comparison instruction according to the multiple target objects selected by the user, and comparing the object information of the multiple target objects based on the first comparison instruction to generate comparison information may include:
generating a first comparison instruction according to the multiple target objects selected by the user, and obtaining respective feature data of at least one first attribute feature corresponding to the multiple target objects based on the first comparison instruction, and generating cost profits according to sales prices and supply prices corresponding to the target objects when the at least one first attribute feature includes a cost feature, and using the cost profits as feature data of the cost feature.

Displaying the comparison information on the user interface may include: displaying the respective feature data of the at least one first attribute feature corresponding to the multiple target objects on the user interface, and displaying corresponding cost profits when at least one first attribute feature includes the cost feature.

A sales price can be pre-set. In actual applications, an object purchased by a user from an object provider can be sold in at least one sales system. Therefore, the sales price can be determined in combination with an object price of an associated target object provided by at least one sales system. For example, an object price of a target object provided by any sales system can be used as a sales price, and the sales price can be used as a reference for users. A supply price can be an object price provided by an object provider in the object provision system. Usually, the sales price minus the supply price can be used as the cost profit. In addition, when users purchase objects from the object provision system and sell them in the sales system, they usually need to pay a certain fee to the sales system, that is, the sales cost. Therefore, optionally, the sales price minus the sales cost minus the supply price can be used as the cost profit. In addition, when users need to pay logistics costs, the cost profit can be obtained by subtracting the sales price by the sales cost, the supply price and the logistics costs. in addition, the cost profit can also be calculated according to the following formula: sales price * sales volume - sales cost - supply price * sales volume - logistics costs, wherein the sales volume can be pre-set or determined in combination with the sales of the target object provided by at least one sales system within a certain period of time, etc.

The cost profit in the comparison information can be a reference profit for users to refer to and assist users in making decisions.

In some embodiments, when the at least one first attribute feature includes a supply price feature, a supply price corresponding to a target object can be used as feature data of a supply price feature.

In addition, when that at least one first attribute feature includes a supply price feature, the at least one first attribute feature can also include a sales price feature, so that a sales price corresponding to a target object can be used as feature data of the sales price feature, so that the user can calculate and obtain a reference using the supply price and the sales price, so as to roughly understand the cost profit, etc., to assist in deciding whether to perform further operations, etc.

In some embodiments, as described above, the comparison information includes respective feature data of at least one first attribute feature corresponding to multiple target objects; the method can also include:
displaying feature prompt information in the user interface; displaying multiple attribute features in the user interface in response to a feature selection operation; generating a second comparison instruction according to at least one second attribute feature selected by the user, so as to compare at least one second attribute feature of multiple target objects based on the second comparison instruction; and updating the comparison information in the user interface based on feature data of at least one second attribute feature.

The embodiments of the present disclosure can provide multiple attribute features for a user to select attribute feature(s) he/she wants to compare. Multiple attribute features can be displayed in a list form and a selection control can be displayed correspondingly for the user to select at least one second attribute feature.

The multiple attribute features in the attribute feature list can be mined based on historical interaction information of multiple first objects or multiple target objects. The historical interaction information can include, for example, chat records between an object provider and different users for a target object, etc. A plurality of attribute features that is of interest to users can be identified from the historical interaction information. Apparently, the multiple attribute features can also be pre-set in combination with an object category, etc. The present disclosure does not have limitations thereon.

Optionally, the multiple attribute features may not include the at least one first attribute feature. In this case, the updated comparison information can also include the feature data of the at least one first attribute feature and feature data of the at least one second attribute feature.

In addition, the multiple attribute features can also include the at least one first attribute feature, so that the user can reselect the attribute feature or cancel a selected first attribute feature, so that the selected at least one second attribute feature can include all first attribute features, or part of the first attribute features, or not include the at least one first attribute feature.

When the at least one second feature attribute includes cost profits, the cost profits may be generated according to sales prices and supply prices respectively corresponding to the multiple target objects, and the cost profits may be used as feature data of a cost feature. When the at least one second feature attribute includes a sales price feature, the sales prices corresponding to the target objects may be used as feature data of the sales price feature.

The evaluation result of each target object may be generated by using a large model based on the feature data of the at least one first feature attribute and/or the feature data of the at least one second feature attribute respectively corresponding to the multiple target objects.

In some embodiments, in order to facilitate the user to view the comparison information, a table may be used to carry the comparison information. Therefore, generating the first comparison instruction according to the multiple target objects selected by the user, so as to compare the object information of the multiple target objects based on the first comparison instruction to generate the comparison information may include:
generating the first comparison instruction according to the multiple target objects selected by the user, so as to obtain respective feature data of the at least one first feature attribute corresponding to the multiple target objects based on the first comparison instruction, and generating a table data based on the respective feature data of at least one first feature attribute corresponding to the multiple target objects.

Displaying the comparison information on the user interface may include: displaying the table data on the user interface.

For the convenience of viewing, the table can be in a form of a cross table. Therefore, the cross table data can be generated based on the feature data of the at least one first attribute feature corresponding to the multiple target objects.

A first header in the cross table data can be, for example, object identification information such as an object name or an object picture, and a second header can be attribute features such as an attribute feature name.

In addition, in order to reduce the difficulty of understanding, improve the reading speed, etc., in some embodiments, generating the first comparison instruction according to the multiple target objects selected by the user, so as to compare the object information of the multiple target objects based on the first comparison instruction to generate the comparison information may include:
generating the first comparison instruction according to the multiple target objects selected by the user, so as to obtain respective feature data of the at least one first attribute feature corresponding to the multiple target objects based on the first comparison instruction, and generating table data based on the respective feature data of the at least one first attribute feature corresponding to the multiple target objects, and setting a field value corresponding to a first attribute feature with the same feature data corresponding to the multiple target objects in the table data as a predetermined mark symbol, and setting a field value corresponding to an attribute feature with different feature data as feature data.

Displaying the comparison information in the user interface may include: displaying table data in the user interface, and displaying a field value corresponding to a first attribute feature with the same feature data in the table data as a predetermined mark symbol, and displaying a field value corresponding to a first attribute feature with different feature data as corresponding feature data.

The predetermined mark symbol may indicate that the corresponding feature data is the same, and for example, may be represented by a predetermined identification symbol such as a check mark or a circle, so that the user can directly determine that the attribute features are the same according to the predetermined mark symbol without spending mental time to check.

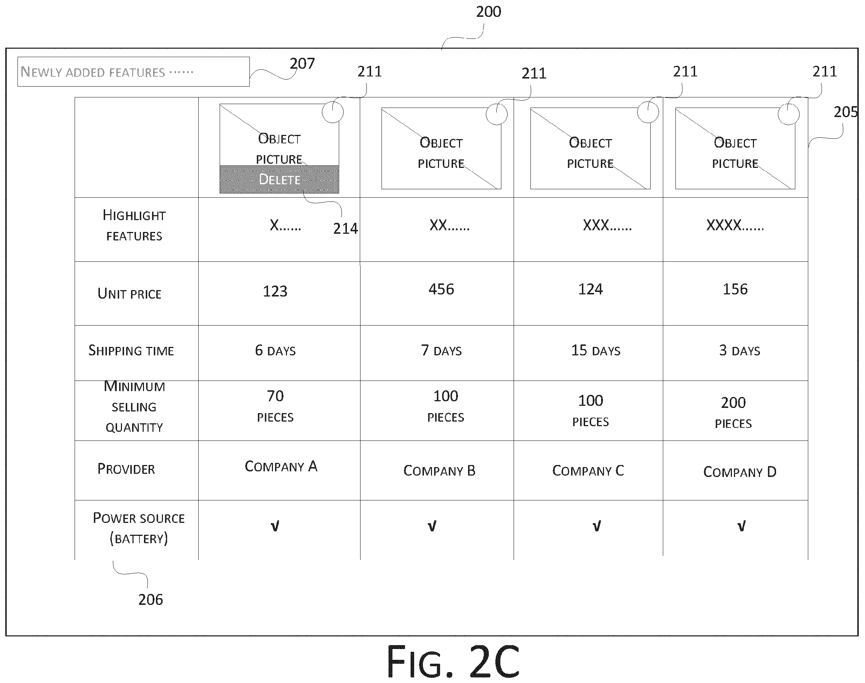

For ease of understanding, in a schematic diagram of an interface as shown in FIG. 2c, the comparison information may be displayed in the user interface 200, and the comparison information is cross-table data, and the comparison information is carried in a form of a cross-table. A first header 205 is object identification information such as an object picture, and a second header 206 may be an attribute feature such as an attribute feature name. The intersection of each row and each column is feature data of an attribute feature corresponding to a target object, wherein an attribute feature with the same feature data is a predetermined mark symbol such as a check mark symbol corresponding to a field value of "power source" in FIG. 2c.

In the schematic diagram of the interface as shown in FIG. 2c, feature prompt information 207 may also be displayed in the user interface 200. The feature prompt information may include, for example, a feature selection control, and a feature selection operation may be a triggering operation for the feature selection control. Based on the feature selection operation, a list of attribute features may be displayed in the user interface for the user to select at least one second attribute feature.

Optionally, after the user selects at least one second attribute feature, the table data may also be updated according to feature data of at least one second attribute feature.

In some embodiments, after the comparison information is displayed in the user interface, the method may further include:
displaying demand prompt information in the user interface in response to an acquisition operation for at least one target object; and sending an interaction request to an object provider that provides the at least one target object based on an interaction request provided by the user.

In some object interaction scenarios, a user needs to communicate with an object provider for an object with which he/she intends to interact to provide his/her own demand information. A cross-border B2B e-commerce scenario is taken as an example. The user can provide a supplier with the quantity of a product required, a delivery address and other special requirements, so that the supplier can further formulate a logistics service plan or provide a more favorable product price for the user for further screening and selection. Therefore, in the embodiments of the present disclosure, the user can further trigger an acquisition operation for at least one target object. At this time, demand prompt information can be displayed in a user interface for the user to provide an interaction request. The interaction request can include information types such as the number of objects, delivery address, and remarks information. Based on the interaction request, an interaction request can be directly sent to an object provider that provides the at least one target object, and the interaction request can include the interaction request.

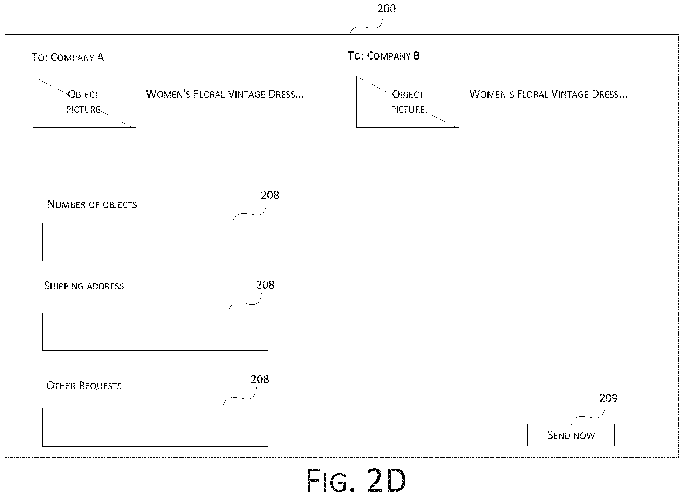

For ease of understanding, in a schematic diagram of an interface shown in FIG. 2d, demand prompt information can be displayed in the user interface 200. The demand prompt information can include information input controls 208 corresponding to at least one demand type such as the number of objects and the delivery address, so that the user can provide a corresponding interaction request through the information input control 208.

The user interface 200 can also display sending prompt information 209. As such, in response to an interaction operation triggered by the sending prompt information 209, an interaction request can be sent to a respective object provider corresponding to each target object based on the interaction request.

In addition, in some embodiments, the method can also include:
displaying demand prompt information in the user interface in response to an acquisition operation for the multiple target objects; and sending an interaction request to an object provider that provides at least one first object based on an interaction request input by the user.

As can be seen from the foregoing description, in response to a first object selection operation, multiple target objects selected by a user can be determined, and then comparison prompt information for the multiple target objects can be displayed in a user interface. In addition, in the embodiments of the present disclosure, demand prompt information for the multiple target objects can also be displayed in the user interface. In the schematic diagram of the interface as shown in FIG. 2b, acquisition prompt information 210 can be displayed in the user interface 200. An acquisition operation for the multiple target objects can be a triggering operation for the acquisition prompt information, etc. In the embodiments of the present disclosure, the user can select the multiple target objects based on the object prompt information to compare the object information to generate comparison information, and then select at least one target object based on the comparison information to provide an interaction request. Apparently, it is also possible to directly confirm and provide the interaction request based on the object prompt information.

In some embodiments, corresponding selection prompt information can be displayed for each target object in the user interface. The selection prompt information can include, for example, a selection control, and a triggering operation based on the selection prompt information of any target object can select a target object, etc.

In addition, for at least one selected target object, acquisition prompt information can also be displayed, and an acquisition operation for the at least one target object can also be a triggering operation for the acquisition prompt information.

For ease of understanding, as shown in FIG. 2c, when the user interface 200 displays the comparison information, selection prompt information 211 corresponding to each target object can be displayed.

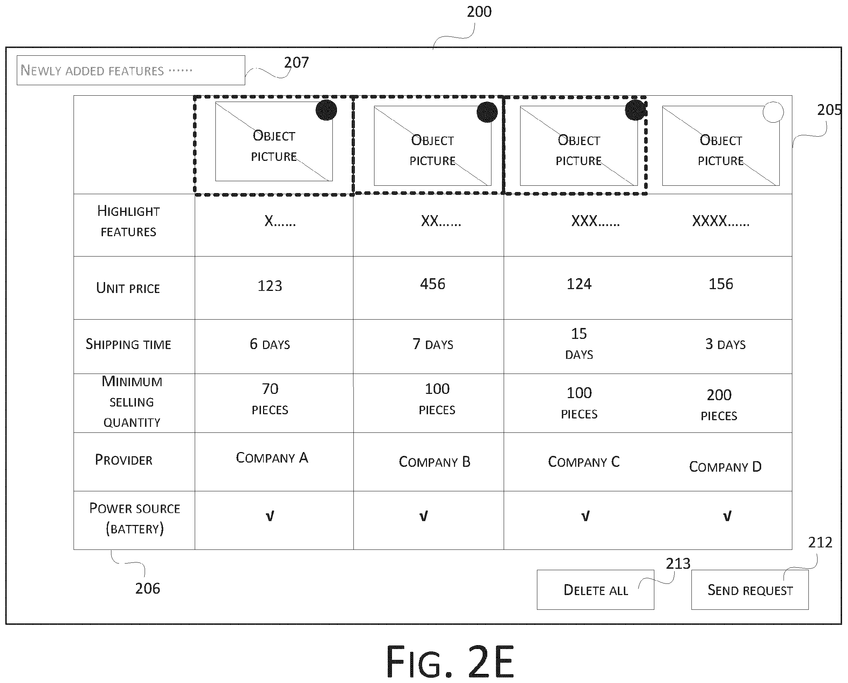

In a schematic diagram of an interface shown in FIG. 2e, after the user selects at least one target object, acquisition prompt information 212 can be displayed in the user interface 200, so that an acquisition operation triggered by the acquisition prompt information 212 can trigger the display of an interface of a schematic diagram as shown in FIG. 2d.

In addition, as shown in FIG. 2e, the user interface 200 can also display clearing prompt information 213, and a triggering operation of the clearing prompt information 213 can delete the comparison information corresponding to the at least one target object.

In addition, as shown in FIG. 2c, when the user interface displays the comparison information, deletion prompt information 214 corresponding to each target object can also be displayed, so that an object deletion operation triggered by the deletion prompt information 214 of any target object can delete the comparison information of that target object.

In addition, corresponding selection prompt information can be displayed only for a target object belonging to a target object provision system. Therefore, in some embodiments, the method may also include:
displaying corresponding selection prompt information for a target object belonging to a target object provision system in the user interface; determining at least one target object selected in response to a second object selection operation that is triggered based on selection prompt information; and displaying acquisition prompt information for the at least one target object in the user interface.

Sending the interaction request to the object provider providing the at least one target object based on the interaction request provided by the user includes: calling a target object provision system to send an interaction request to at least one object provider providing the at least one target object based on the interaction request provided by the user.

The target object provision system may be an object provision system in an integrated object processing system, that is, a server end of the object processing system may be the same server end as a server end of the target object provision system. Apparently, the target object provision system may be an object provision system authorized for use by the object processing system, so that the target object provision system may be called through a corresponding interface, etc.

In some embodiments, after or at the same time when displaying the object prompt information corresponding to the multiple first objects on the user interface, the method may further include:
displaying at least one feature keyword on the user interface; generating an update instruction based on at least one target feature keyword selected by the user, so as to filter at least one first object matching the at least one target feature keyword from the multiple first objects based on the update instruction, and updating the user interface to display object prompt information of the at least one first object.

The at least one feature keyword may be generated based on the feature data of the attribute features involved in the multiple first objects. For example, at least one feature keyword may include multiple pieces of feature data corresponding to each specific attribute feature.

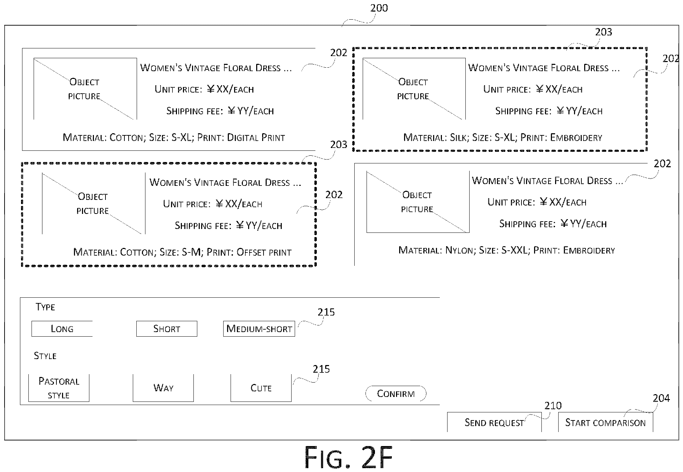

For ease of understanding, a schematic diagram of an interface shown in FIG. 2f is different from the schematic diagram of the interface shown in FIG. 2c in that, in FIG. 2f, at least one feature keyword 215 may also be displayed in the user interface 200, and the at least one feature keyword may correspond to one or more specific attribute features. For example, if a specific attribute feature is type, corresponding pieces of feature data such as a long type, a short type, a medium-long type, etc., are feature keywords. For example, if a specific attribute feature is style, corresponding pieces of feature data such as a pastoral style, a French style, cute, etc., are feature keywords.

Optionally, each feature keyword can be displayed in a feature control, and a triggering operation for the feature control can select a corresponding target feature keyword, and the selected target feature keyword can also display corresponding specific tag information, etc. In addition, a confirmation control can be displayed in the user interface to trigger the generation of an update instruction.

In some embodiments, the method may also include:
searching for object information of at least one second object that meets a second similarity condition with the multiple first objects from at least one object provision system, and generating object prompt information based on the object information; and displaying the object prompt information of the at least one second object in the user interface.

Generating the first comparison instruction based on the multiple target objects selected by the user includes:
determining the multiple target objects and generate a first comparison instruction in response to a first object selection operation for the multiple first objects and at least one second object.

In other words, in addition to determining the multiple first objects based on the search information, it is also possible to search for similar second objects based on each first object according to object similarity. The second similarity condition may be, for example, that an object similarity is greater than a certain similarity threshold, etc. An object similarity can be calculated based on object information of a first object and object information of a second object, etc.

In some embodiments, the method may also include:
generating a first comparison instruction based on the multiple target objects selected by the user, and comparing object information of the multiple target objects based on the first comparison instruction to generate the comparison information, including:
determining at least one first candidate object that is selected and searching for at least one second candidate object that meets a first similarity condition with the at least one first candidate object from at least one object provision system in response to a first object selection operation; using the at least one first candidate object and the at least one second candidate object as the multiple target objects and generating a first comparison instruction, so as to compare the object information of the multiple target objects based on the first comparison instruction to generate the comparison information.

In other words, the user can select at least one first candidate object from the multiple first objects, and then search for a second candidate object similar to each first candidate object based on object similarity. A first similarity condition may be, for example, that the object similarity is greater than a certain similarity threshold, etc. An object similarity may be calculated based on object information of a first candidate object and an object information of a second candidate object, etc.

A similarity threshold in a second similarity condition may be the same as or different from the similarity threshold in the first similarity condition.

A first object selection operation may be performed for at least one first object, or for at least one first object and at least one second object.

In some embodiments, generating the search instruction based on the search information provided by the user, obtaining the object information corresponding to the multiple first objects matching the search information from the at least one object provision system based on the search instruction, and generating the object prompt information based on the object information may include:
obtaining the search information input by the user; and
extracting at least one search keyword from the search information using a large model, and generating the search instruction based on the at least one search keyword.

The search information input by the user may be a piece of text, so that at least one search keyword can be extracted from the search information using a large model and a search can be performed.

In addition, in some embodiments, generating the search instruction based on the search information provided by the user, obtaining the object information corresponding to the multiple first objects matching the search information from the at least one object provision system based on the search instruction, and generating the object prompt information based on the object information may include:
obtaining the search information input by the user, and generating the search instruction based on the search information, sending the search instruction to a server, to cause the server to use a big model to extract at least one search keyword from the search information, obtain the object information corresponding to the multiple first objects matching the search information from the at least one object provision system, and generate the object prompt information based on the object information.

That is, the client or the server can process the search information using a big model to obtain at least one search keyword. The present disclosure does not have limitations thereon.

It should be noted that the large model involved in the embodiments of the present disclosure refers to an artificial intelligence model with an extremely high number of parameters and computing power. In practical applications, the large model can be implemented by a large language model, such as GPT-3 (Generative Pre-Trained Transformer -3, the third generation of generative pre-training model), GPT-4 (Generative Pre-Trained Transforme-4, the fourth generation of generative pre-training model), BERT (Bidirectional Encoder Representation from Transformers, a bidirectional encoder model based on Transformers), Turing NLG (Turing Natural language Generation), etc. In the embodiments of the present disclosure, the large model that performs different operations such as generating evaluation results and extracting at least one search keyword can be the same large model or a different large model, and the present disclosure does not have limitations therein. With the help of artificial intelligence large models, users do not need to enter search keywords that require certain symbol requirements, and directly use natural language combined with search intents to provide corresponding search information, that is, accurate search matching can be achieved. The search information may be, for example, "I want to find a blue dress with lace", and at least one search keyword extracted by means of the large model may include, for example, "blue", "lace", and "dress", etc.

In some embodiments, the method may further include:
saving the comparison information, and displaying the comparison prompt information in the user interface in response to the user's saving operation; and detecting a viewing operation for the comparison prompt information, and displaying the comparison information in the user interface.

In this embodiment, the current comparison information can be saved, so that it can be viewed later, etc.

In some embodiments, the method may further include:
displaying new prompt information in the user interface;
displaying the object prompt information corresponding to the multiple first objects in the user interface in response to a first new operation, and updating the multiple target objects and generating a third comparison instruction in response to an object reselection operation, so as to compare the object information of the multiple target objects based on the third comparison instruction to update the comparison information; or
in response to a second new operation, obtaining an object link provided by the user, and updating the multiple target objects based on an object indexed by the object link, and generating a fourth comparison instruction, so as to compare the object information of the multiple target objects based on the fourth comparison instruction to update the comparison information.
In an event that the user interface displays the comparison information, new prompt information may also be displayed for the user to add objects for comparison, etc.

The first new operation can trigger redisplay of the object prompt information corresponding to the multiple first objects, and the user can reselect a plurality of target objects. The client can display the object prompt information corresponding to the multiple first objects in a pop-up page, a floating page, or a drawer page.

The second new operation can support the user to provide an object link, so that an object indexed by the object link can be added to the multiple target objects for comparison, and corresponding object information can be obtained in an object page indexed by the object link.

Apparently, in combination with the previous description, it can be seen that when the comparison information is displayed in the user interface, any target object can also be directly deleted.

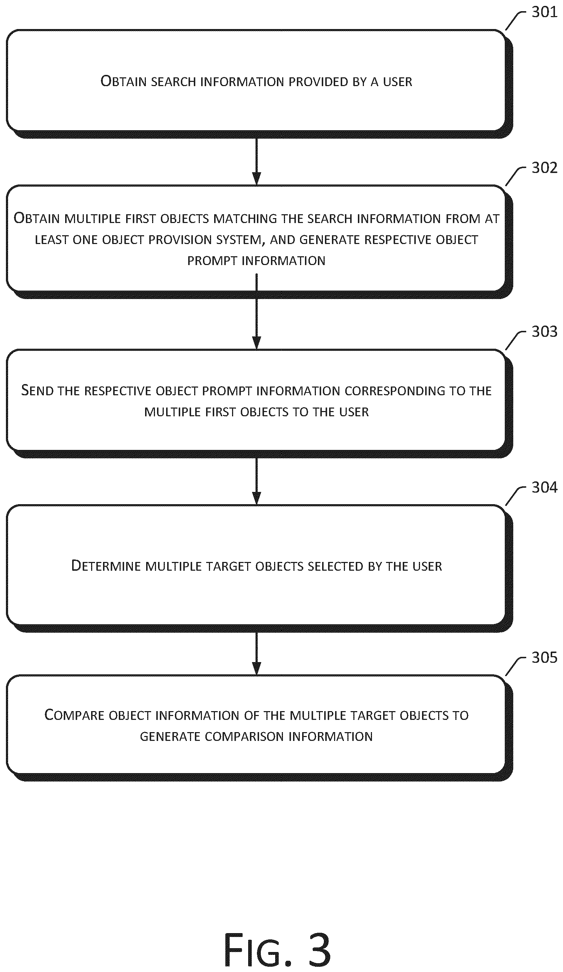

FIG. 3 is a flowchart of another exemplary object processing method provided by the embodiments of the present disclosure. The technical solution of this embodiment can be executed by a client or a server. The method may include the following steps:
301: Obtain search information provided by a user.

When the technical solution of this embodiment is executed by the server, search prompt information may be provided to the client so that the client can display the search prompt information in the user interface. In this case, obtaining the search information provided by the user may be: obtaining a search instruction sent by the client to determine the search information provided by the user, the search instruction being generated by the client based on the search information provided by the user.

302: Obtain respective object information corresponding to multiple first objects matching the search information from at least one object provision system, and generate respective object prompt information based on the object information.

When the technical solution of this embodiment is executed by the server, respective object information corresponding to multiple first objects matching the search information may be obtained from at least one object provision system based on the search instruction, and object prompt information may be generated based on the object information.

303: Send the respective object prompt information corresponding to the multiple first objects to the user.

When the technical solution of this embodiment is executed by the server, respective object prompt information corresponding to the multiple first objects may be sent to the client, so that the client can display the respective object prompt information corresponding to the multiple first objects in the user interface.

304: Determine multiple target objects selected by the user.

305: Compare object information of the multiple target objects to generate comparison information.

When the technical solution of this embodiment is executed by the server, determining the multiple target objects selected by the user may be obtaining a first comparison instruction sent by the client to determine the multiple target objects selected by the user, the first comparison instruction being generated by the client according to the multiple target objects selected by the user. Comparing the object information of the multiple target objects to generate the comparison information may be based on comparing the object information of the multiple target objects to generate the comparison information based on the first comparison instruction.

In addition, the server may also send the comparison information to the client, so that the client can display the comparison information in the user interface.

In some embodiments, when the technical solution of this embodiment is executed by the server, the method may also include:
obtaining an acquisition request for at least one target object; sending demand prompt information to the client; and sending an interaction request to an object provider providing the at least one target object based on an interaction request provided by the user.

The acquisition request may be generated by the client in response to an acquisition operation for at least one target object. The client can send an interaction request provided by the user to the server, so that the server can send an interaction request to the object provider based on the interaction request.

For example, the interaction request can be sent to an object provider of each target object through a communication account. The communication account can be, for example, an email account, a registered account in the object provision system, etc.

In some embodiments, when the technical solution of this embodiment is executed by the server, the method can also include:
for a target object belonging to a target object provision system, sending selection prompt information to the client; determining at least one target object according to a second object selection request sent by the client, and sending acquisition prompt information to the client; and sending demand prompt information to the client in response to the acquisition request for the at least one target object sent by the client.

Then, sending the interaction request to the object provider providing the at least one target object based on the interaction request provided by the user includes: calling a target object provision system to send the interaction request to at least one object provider providing the at least one target object, based on the interaction request provided by the user.

In some embodiments, the method may further include:
searching for at least one second object that satisfies a second similarity condition with the multiple first objects from at least one object provision system; sending object prompt information of the at least one second object to the client to display the object prompt information of the at least one second object in the user interface; and generating a first comparison instruction for multiple target objects determined by object selection operations of the multiple first objects and multiple second objects.

In some embodiments, obtaining the first comparison instruction may include:
obtaining a first object selection request sent by the client to determine at least one first candidate object; searching for at least one second candidate object that satisfies a first similarity condition with the at least one first candidate object from at least one object provision system; using the at least one first candidate object and the at least one second candidate object as the multiple target objects and generating the first comparison instruction.

The first object selection request may be generated by the client in response to a first object selection operation, etc.

In some embodiments, the comparison information may include feature data of at least one first attribute feature corresponding to the multiple target objects respectively, and the method may further include:
sending multiple attribute features to the client; generating a second comparison instruction based on at least one second attribute feature selected by the user to compare the at least one second attribute feature of the multiple target objects based on the second comparison instruction in response to a feature selection request sent by the client; and updating the comparison information based on feature data of the at least one second attribute feature.

The feature selection request may be generated by the client in response to a feature selection operation for the multiple attribute features.

In some embodiments, the method may further include:
generating an evaluation result of any target object using a large model based on respective pieces of feature data of at least one first attribute feature corresponding to the multiple target objects; and using respective evaluation results corresponding to the multiple target objects as the comparison information.

Apparently, it may also be possible to generate an evaluation result of any target object using a large model based on respective pieces of feature data of at least one first attribute feature and at least one second attribute feature corresponding to multiple target objects.

In some embodiments, the method may further include:
when the at least one first attribute feature or the at least one second attribute feature includes a cost feature, generating a cost profit according to a sales price and a supply price corresponding to a target object, and using the cost profit as feature data of the cost feature; and
when the at least one first attribute feature or the at least one second attribute feature includes a sales price feature, using the sales price corresponding to the target object as feature data of the sales price feature.

In some embodiments, comparing the object information of the multiple target objects based on the first comparison instruction to generate the comparison information may include:
obtaining respective pieces of feature data corresponding to at least one first attribute feature of the multiple target objects based on the first comparison instruction; generating table data based on the respective pieces of feature data corresponding to the at least one first attribute feature of the multiple target objects, and setting a field value corresponding to a first attribute feature with same feature data corresponding to the multiple target objects in the table data as a predetermined mark symbol, and setting a field value corresponding to an attribute feature with different feature data as the feature data.

The table data is sent to the client as the comparison information, so that the client can display the table data.

In some embodiments, obtaining the object information corresponding to the multiple first objects matching the search information from the at least one object provision system based on the search instruction, and generating the object prompt information based on the object information may include:
using a large model to extract at least one search keyword from the search information, and obtaining the object information corresponding to the multiple first objects matching the search information from the at least one object provision system, and generating the object prompt information based on the object information.

In some embodiments, the method may further include:
obtaining an acquisition request for the multiple target objects; sending demand prompt information for the multiple target objects to the client; and sending an interaction request to an object provider providing the multiple target objects based on an interaction request provided by the user.

In some embodiments, the method may further include:
saving the comparison information in response to a saving request, and sending viewing prompt information to the client; detecting a viewing request for comparison prompt information, and send the comparison information to the client.

The comparison information can be saved in the client or in the server, and then sent to the client for display by the server according to the client's viewing request. The viewing request can be generated by the client in response to a viewing operation for viewing prompt information.

In some embodiments, the method may further include:
sending new prompt information to the client;
receiving a third comparison instruction, determining a plurality of target objects after an update, and comparing object information of the plurality of target objects to update the comparison information, the plurality of target objects after the update being determined based on an object reselection operation for the multiple first objects; or
receiving a fourth comparison instruction, updating the multiple target objects based on an object of an object link index provided by the user, and comparing object information of the multiple target objects to update the comparison information.

After receiving the third comparison instruction, the object prompt information corresponding to the multiple first objects can be sent to the client, and the client can display it. Optionally, the client can display the object prompt information corresponding to the multiple first objects in a form of a pop-up page, a floating page or a drawer page. Then, the multiple target objects after the update can be determined according to an object reselection request sent by the client. The object reselection request can be generated by the client in response to an object reselection operation.

The fourth comparison instruction can be generated by the client according to the object link provided by the user.

It should be noted that specific methods of corresponding operations in the embodiments shown in FIG. 3 have been described in detail in relevant embodiments described above, and will not be elaborated herein.

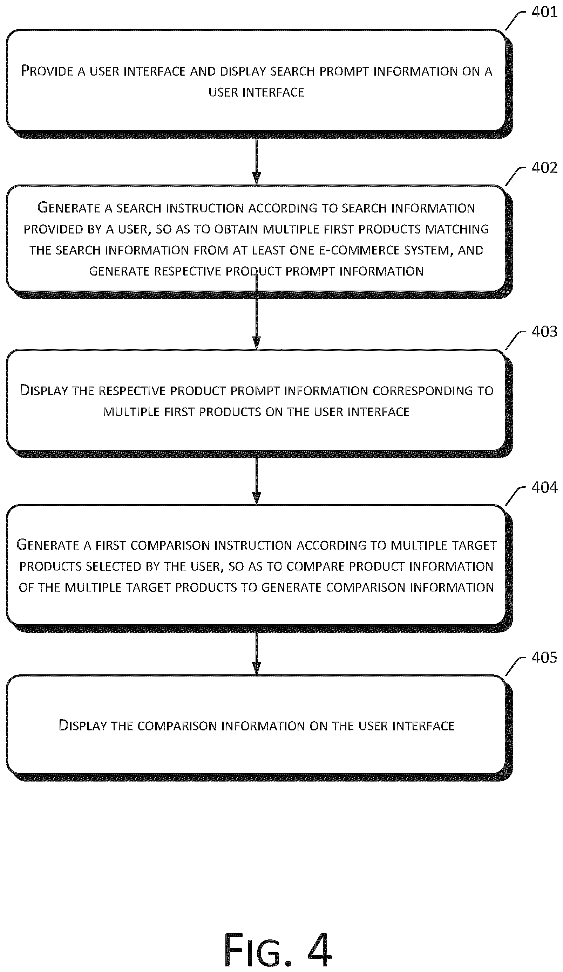

In a practical application, the technical solutions of the embodiments of the present disclosure can be applied to an e-commerce scenario to achieve product information comparison. In the e-commerce scenario, the object refers to a product, the object provider refers to a merchant, and the object provision system refers to an e-commerce system. As shown in FIG. 4, the embodiments of the present disclosure also provide a product information comparison method. The technical solutions of the embodiments can be executed by a client. The method may include the following steps:
401: Provide a user interface and display search prompt information on a user interface.
402: Generate a search instruction according to search information provided by a user, so as to obtain respective product information corresponding to multiple first products matching the search information from at least one e-commerce system based on the search instruction, and generate respective product prompt information based on the product information.
403: Display the respective product prompt information corresponding to multiple first products on the user interface.
404: Generate a first comparison instruction according to multiple target products selected by the user, so as to compare product information of the multiple target products based on the first comparison instruction to generate comparison information.
405: Display the comparison information on the user interface.

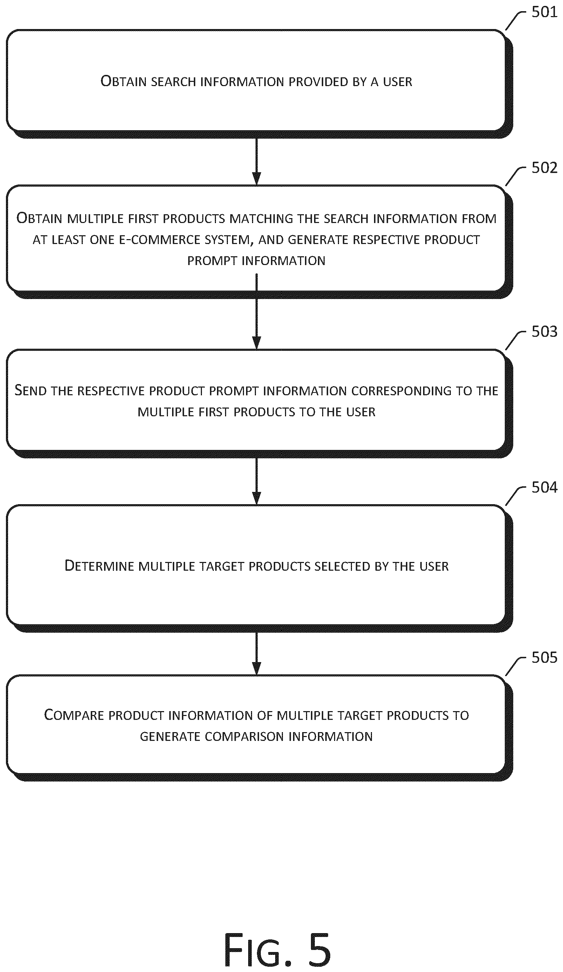

It should be noted that the embodiments shown in FIG. 4 is different from the embodiments shown in FIG. 1 and the above-mentioned related embodiments in that the object is specifically implemented as a product, the object provision system is specifically implemented as an e-commerce system, and the object provider is a merchant. Other identical or corresponding operations can be described in detail in the embodiments as shown in FIG. 1 and related embodiments as described above, and will not be repeated herein. As shown in FIG. 5, the embodiments of the present disclosure also provide a product information comparison method, which may include the following steps:
501: Obtain search information provided by a user.
502: Obtain respective product information corresponding to multiple first products matching the search information from at least one e-commerce system, and generate respective product prompt information based on the product information.
503: Send the respective product prompt information corresponding to the multiple first products to the user.
504: Determine multiple target products selected by the user.
505: Compare product information of multiple target products to generate comparison information.

It should be noted that the embodiments shown in FIG. 5 are different from the embodiments shown in FIG. 3, and the above-mentioned related embodiments in that the object is specifically implemented as a product, the object provision system is specifically implemented as an e-commerce system, and the object provider id a merchant. Other identical or corresponding operations can be described in detail in the embodiments as shown in FIG. 3 and the above-mentioned related embodiments, and will not be repeated herein.

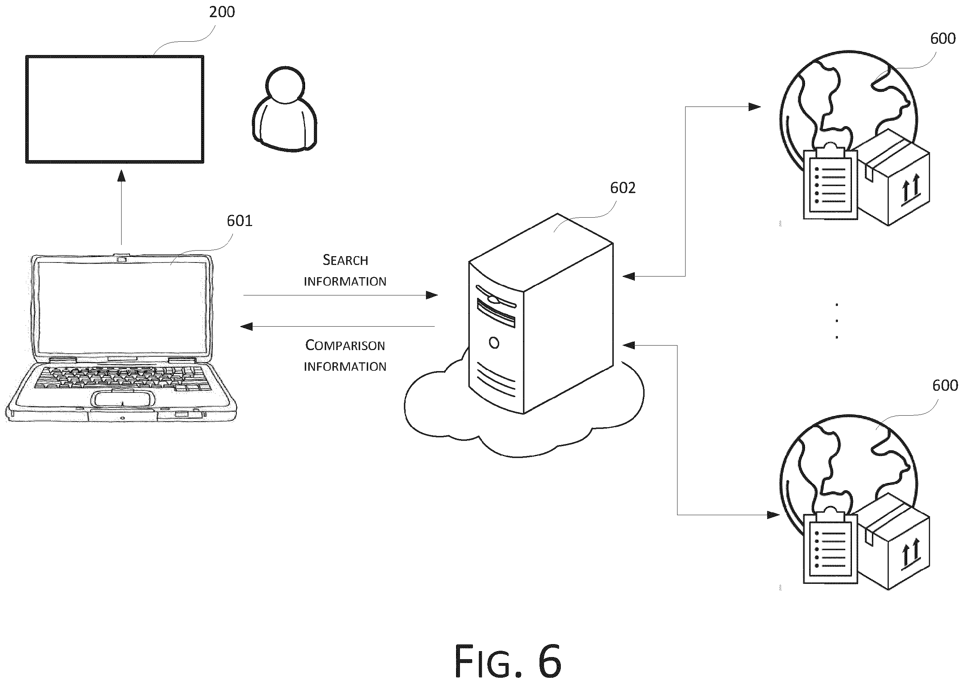

In a practical application, the technical solutions of the embodiments of the present disclosure can be specifically applied to a cross-border e-commerce B2B scenario, where the user can refer to a seller, the object provider is a supplier, the object is a product, and the object provision system is also a cross-border e-commerce system. A cross-border B2B e-commerce scenario is taken as an example. In a scene interaction diagram as shown in FIG. 6, s client 601 can provide a user interface 200, and s server 602 can send search prompt information to the client 601, so that the client 601 can display search prompt information in the user interface 200.

In response to a user input operation, the client 601 can determine search information provided by a user and generate a search instruction, so that the search instruction can be sent to the server 602. The server 602 can obtain respective product information corresponding to multiple first products matching the search information from at least one cross-border e-commerce system 600 based on the search instruction, and generate product prompt information based on the product information. The server 602 can send the product prompt information to the client 601, and the client 601 displays the product prompt information of the multiple first products in the user interface.

The client 601 can send a first product selection request to the server 602 in response to a first product selection operation, so that the server 602 can determine multiple target products selected by the user. The server 602 can send comparison prompt information to the client 601, so that the client can display the comparison prompt information in the user interface, and send a first comparison instruction to the server 602 in response to the user's comparison operation on the comparison prompt information. The server 602 compares product information of the multiple target products based on the first comparison instruction to generate comparison information.

Afterwards, the server 602 can send the comparison information to the client 601, and the client 601 can display the comparison information in the user interface. The client 601 can respond to a second product selection operation, and send a second product selection request to the server 602, so that the server 602 can determine at least one target product selected by the user, and send acquisition prompt information to the client 601. The client 601 displays the acquisition prompt information in the user interface, and can perceive an acquisition operation triggered by the acquisition prompt information, thereby sending an acquisition request to the server 602. The server 602 can send demand prompt information to the client 601 according to the acquisition request, and the client 601 displays the demand prompt information in the user interface, and can perceive an interaction request input by the user and send the interaction request to the server 602, so that the server 602 can send an interaction request to a supplier providing the at least one target product based on the interaction request.

The comparison information displayed by the client 601 may include feature data corresponding to at least one first attribute feature of each target product, and the at least one attribute feature may include a cost feature. The comparison information may also include evaluation results of each target product, so as to meet differentiated needs of different users. In addition, for attribute features with the same feature data, the feature data may be represented by a same predetermined mark symbol to improve the speed of reading and reduce the difficulty of understanding. In addition, the comparison information may also be saved for next viewing or continued comparison.

In the embodiments of the present disclosure, comparison information can be saved so that the comparison information is traceable. As such, it is not necessary to re-search a product every time a comparison is performed, thereby improving the efficiency of comparison. In addition, a cost profit corresponding to a cost feature and an evaluation result obtained by integrating feature data of different attribute features can also be displayed in the comparison information, which can help users make quick decisions. In addition, the user only needs to search once to compare all the products on the entire network, thereby reducing the user's search and labor costs in various e-commerce systems, which thus improves the efficiency of product information comparison, simplifies the product information comparison operation, and improves the user experience.

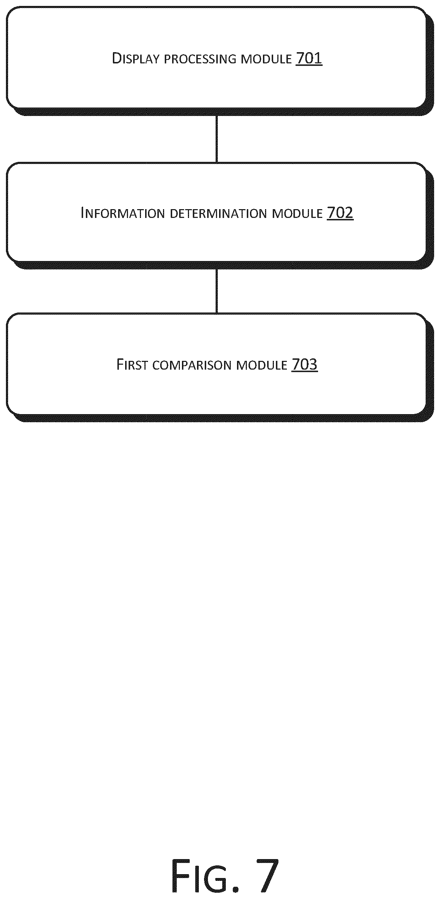

FIG. 7 is a structural schematic diagram of an exemplary object processing apparatus provided in the embodiments of the present disclosure, and the apparatus may include:
A display processing module 701 is configured to provide a user interface and display search prompt information on a user interface.

An information determination module 702 is configured to generate a search instruction according to search information provided by a user, so as to obtain respective object information corresponding to multiple first objects matching the search information from at least one object provision system based on the search instruction, and generate respective object prompt information based on the object information.

The display processing module 701 is further configured to display the respective object prompt information corresponding to the multiple first objects on the user interface.

A first comparison module 703 is configured to generate a first comparison instruction according to multiple target objects selected by the user, so as to generate comparison information by comparing object information of the multiple target objects based on the first comparison instruction.

The display processing module 701 is further configured to display the comparison information on the user interface.

In a practical application, the technical solutions of the embodiments of the present disclosure can be applied to e-commerce scenarios. In an e-commerce scenario, the object refers to a product, the object provider also refers to a merchant, and the object provision system also refers to an e-commerce system. In some embodiments, the above-mentioned information determination module can specifically generate a search instruction according to search information provided by a user, so as to obtain respective product information corresponding to multiple first products matching the search information from at least one e-commerce system based on the search instruction, and generate respective product prompt information based on the product information.

The display processing module can be specifically configured to display the respective product prompt information corresponding to the multiple first products on the user interface.

The first comparison module can be specifically configured to generate a first comparison instruction according to multiple target products selected by the user, so as to generate comparison information by comparing product information of the multiple target products based on the first comparison instruction.

In some embodiments, the display processing module is further configured to display demand prompt information in the user interface in response to an acquisition operation for at least one target object; send an interaction request to an object provider that provides the at least one target object according to an interaction request provided by the user.

In some embodiments, the first comparison module can be specifically configured to determine at least one first candidate object that is selected in response to a first object selection operation and find at least one second candidate object that meets a first similarity condition with the at least one first candidate object from the at least one object provision system; and use the at least one first candidate object and the at least one second candidate object as the multiple target objects and generate a first comparison instruction to compare the object information of the multiple target objects based on the first comparison instruction to generate the comparison information.

In some embodiments, the display processing module can also be configured to display corresponding selection prompt information for a target object belonging to a target object provision system in the user interface; determine at least one target object that is selected in response to a second object selection operation triggered based on selection prompt information; and display acquisition prompt information for the at least one target object in the user interface.

The display processing module sends an interaction request to an object provider providing the at least one target object based on an interaction request provided by the user, which includes: calling the target object provision system to send an interaction request to at least one object provider providing the at least one target object based on the interaction request provided by the user.

In some embodiments, the display processing module is further configured to display at least one feature keyword in the user interface; generate an update instruction according to the at least one target feature keyword selected by the user, so as to filter at least one first object matching the at least one target feature keyword from the multiple first objects based on the update instruction, and update the user interface to display object prompt information of the at least one first object.

In some embodiments, the comparison information includes respective pieces of feature data of at least one first attribute feature corresponding to the multiple target objects. The display processing module is further configured to display feature prompt information in the user interface; display multiple attribute features in the user interface in response to a feature selection operation; generate a second comparison instruction based on at least one second attribute feature selected by the user, and compare the at least one second attribute feature of the multiple target objects based on the second comparison instruction; and update the comparison information in the user interface based on feature data of the at least one second attribute feature.

In some embodiments, the first comparison module may specifically generate a first comparison instruction according to the multiple target objects selected by the user, so as to obtain respective pieces of feature data of at least one first attribute feature corresponding to the multiple target objects based on the first comparison instruction, and generate an evaluation result of any target object based on the respective pieces of feature data of the at least one first attribute feature corresponding to the multiple target objects using a large model, and use the respective pieces of feature data of the at least one first attribute feature corresponding to the multiple target objects and corresponding evaluation results as comparison information.

The display processing module may specifically display the respective pieces of feature data of the at least one first attribute feature corresponding to the multiple target objects and the corresponding evaluation results on the user interface.

In some embodiments, the first comparison module may specifically generate a first comparison instruction according to the multiple target objects selected by the user, so as to obtain respective pieces of feature data of at least one first attribute feature corresponding to the multiple target objects based on the first comparison instruction, generate cost profits according to respective sales prices and respective supply prices corresponding to the multiple target objects when the at least one first attribute feature includes a cost feature, and use the cost profits as feature data of the cost feature or use the sales prices corresponding to the target objects as the feature data of a sales price feature when the at least one first attribute feature includes the sales price feature.

The display processing module may display the comparison information in the user interface by displaying respective pieces of feature data of the at least one first attribute feature corresponding to the multiple target objects in the user interface, and display corresponding cost profits when at least one first attribute feature includes a cost feature; or display corresponding sales prices when the at least one first attribute feature includes a sales price feature.

In some embodiments, the first comparison module may specifically generate a first comparison instruction according to the multiple target objects selected by the user, so as to obtain respective pieces of feature data of at least one first attribute feature corresponding to the multiple target objects based on the first comparison instruction, and generate table data based on the respective pieces of feature data of the at least one first attribute feature corresponding to the multiple target objects, and set a field value corresponding to a first attribute feature with a same feature data corresponding to the multiple target objects in the table data as a predetermined mark symbol, and set a field value corresponding to an attribute feature with different feature data as the feature data.

The display processing module may display the comparison information in the user interface by displaying table data in the user interface, and display a field value corresponding to a first attribute feature with a same feature data as a predetermined mark symbol in the table data, and display a field value corresponding to a first attribute feature with different feature data as corresponding feature data.

In some embodiments, the information determination module may specifically obtain the search information input by the user, and generate the search instruction according to the search information, so as to extract at least one search keyword from the search information using a large model based on the search instruction, and obtain the object information corresponding to the multiple first objects matching the search information from the at least one object provision system, and generate the object prompt information based on the object information.

In some embodiments, the apparatus may also include:
a saving module, configured to save the comparison information in response to a user saving operation, and display viewing prompt information in the user interface.

The display processing module is further configured to detect a viewing operation for the viewing prompt information, and display the comparison information in the user interface.

In some embodiments, the display processing module is further configured to display newly added prompt information on the user interface.

In response to a first addition operation, display the object prompt information corresponding to the multiple first objects is displayed on the user interface, and in response to an object reselection operation, the multiple target objects are updated and a third comparison instruction is generated to compare the object information of the multiple target objects based on the third comparison instruction to update the comparison information.

Or, in response to s second addition operation, an object link provided by the user is obtained, and the multiple target objects are updated based on the object indexed by the object link and a fourth comparison instruction is generated to compare the object information of the multiple target objects based on the fourth comparison instruction to update the comparison information.

The object processing apparatus described in FIG. 7 can execute the object processing method described in the embodiments as shown in FIG. 1, and its implementation principles and technical effects are not repeated herein. Specific manners in which each module and unit performs the operations of the object processing apparatus in the foregoing embodiments have been described in detail in the method embodiments, and will not be described in detail herein.

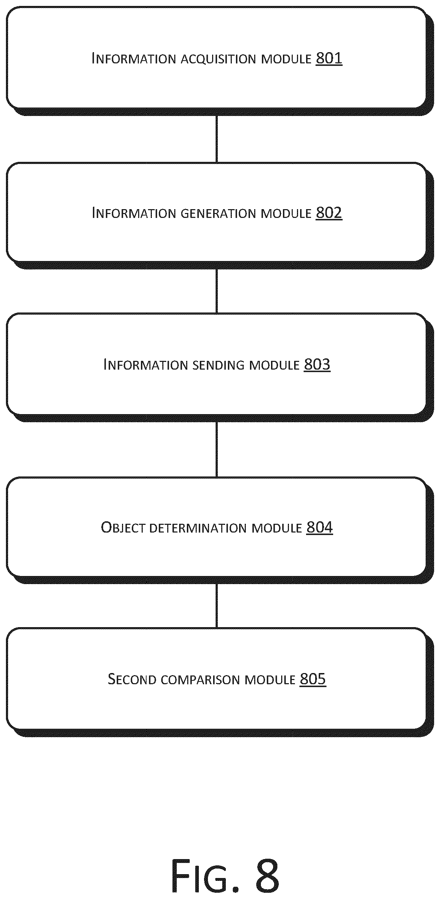

FIG. 8 is a structural schematic diagram of another exemplary object processing apparatus provided in the embodiments of the present disclosure, and the apparatus may include:
an information acquisition module 801, configured to obtain search information provided by a user;
an information generation module 802, configured to obtain object information corresponding to multiple first objects matching the search information from at least one object provision system, and generate object prompt information based on the object information;
an information sending module 803, configured to send the object prompt information corresponding to the multiple first objects to the user;
an object determination module 804, configured to determine multiple target objects selected by the user; and
a second comparison module 805, configured to compare object information of the multiple target objects to generate comparison information.

In a practical application, the technical solutions of the embodiments of the present disclosure can be applied to e-commerce scenarios. In an e-commerce scenario, the object refers to a product, the object provider refers to a merchant, and the object provision system refers to an e-commerce system. In some embodiments, the information generation module can be specifically configured to obtain product information corresponding to multiple first products matching the search information from at least one e-commerce system, and generate product prompt information based on the product information.

The information sending module can be specifically configured to send product prompt information corresponding to the multiple first products to the user.

The object determination module can be specifically configured to determine multiple target products selected by the user.

The second comparison module can be specifically configured to compare product information of the multiple target products to generate comparison information.

The object processing apparatus described in FIG. 8 can execute the object processing method described in the embodiments shown in FIG. 3, and its implementation principles and technical effects will not be repeated. Specific manners in which each module and unit performs operations in the object processing apparatus in the foregoing embodiments have been described in detail in the method embodiments, and will not be described in detail herein.

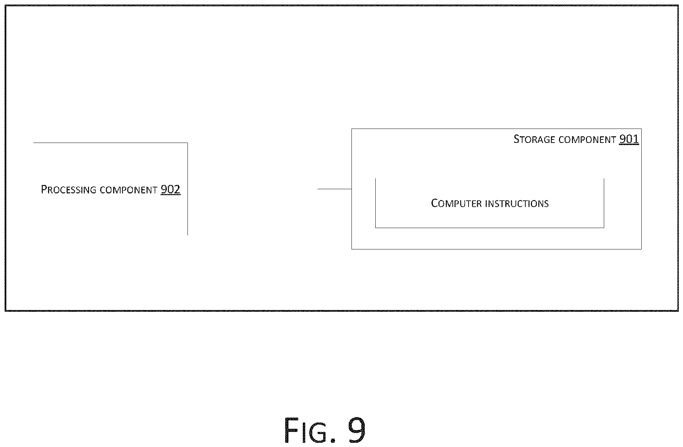

The embodiments of the present disclosure also provide a computing device, as shown in FIG. 9. In the embodiments of the present disclosure, each of the foregoing apparatuses may include one or more computing devices, or may be included in a computing device. The device may include a storage component 901 and a processing component 902.

The storage component 901 stores one or more computer instructions, wherein the one or more computer instructions are called and executed by the processing component 902 to implement the object processing method described in the embodiments as shown in FIG. 1, the object processing method described in the embodiments as shown in FIG. 3, the product information comparison method described in the embodiments as shown in FIG. 4, or the product information comparison method described in the embodiments as shown in FIG. 5.

Apparently, the computing device may also include other components, such as an input/output interface, a display component, a communication component, etc.

The processing component in the computing device is configured to implement the object processing method as shown in FIG. 1, or the product information comparison method as shown in FIG. 4. The computing device may also include a display component to perform corresponding display operations.

The input/output interface provides an interface between the processing component and a peripheral interface module. The peripheral interface module may be an output device, an input device, etc. The communication component is configured to facilitate wired or wireless communication between the computing device and other devices, etc.

The processing component 902 may include one or more processors to execute computer instructions to complete all or part of the steps in the above methods. Apparently, the processing component can also be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above methods.

The storage component 901 is configured to store various types of data to support operations at the terminal. The storage component can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk. In the embodiments of the present disclosure, the storage component 901 may include memory, which may include a form of computer readable media such as a volatile memory, a random access memory (RAM) and/or a non-volatile memory, for example, a read-only memory (ROM) or a flash RAM. The memory is an example of a computer readable media.

The computer readable media may include a volatile or non-volatile type, a removable or non-removable media, which may achieve storage of information using any method or technology. The information may include a computer readable instruction, a data structure, a program module or other data. Examples of computer readable media include, but not limited to, phase-change memory (PRAM), static random access memory (SRAM), dynamic random access memory (DRAM), other types of random-access memory (RAM), read-only memory (ROM), electronically erasable programmable read-only memory (EEPROM), quick flash memory or other internal storage technology, compact disk read-only memory (CD-ROM), digital versatile disc (DVD) or other optical storage, magnetic cassette tape, magnetic disk storage or other magnetic storage devices, or any other non-transmission media, which may be used to store information that may be accessed by a computing device. As defined herein, the computer readable media does not include transitory media, such as modulated data signals and carrier waves.

The display component can be an electroluminescent (EL) element, a liquid crystal display, a microdisplay with a similar structure, a retinal direct display, or a similar laser scanning display.

It should be noted that, when the computing device implements the object processing method as shown in FIG. 1, or the product information comparison method as shown in FIG. 4, it can be specifically implemented as an electronic device, which can refer to a device used by a user and has the functions of computing, surfing the Internet, communicating, etc. required by the user, such as a mobile phone, a tablet computer, a personal computer, a wearable device, etc.

When the computing device implements the object processing method as shown in FIG. 3, or the product information comparison method as shown in FIG. 5, it can be a physical device or an elastic computing host provided by a cloud computing platform, etc. It can be implemented as a distributed cluster composed of multiple servers or terminal devices, or as a single server or a single terminal device.

The embodiments of the present disclosure also provide a computer-readable storage medium, which stores a computer program. The computer program, when executed by a computer, can implement the object processing method described in the embodiments as shown in FIG. 1, the object processing method described in the embodiments as shown in FIG. 3, the product information comparison method described in the embodiments as shown in FIG. 4, or the product information comparison method described in the embodiments as shown in FIG. 5. The computer-readable medium can be included in the electronic device described in the above embodiments, or can exist alone without being assembled into the electronic device.

The embodiments of the present disclosure also provide a computer program product, which includes a computer program carried on a computer-readable storage medium. The computer program, when executed by a computer, can implement the object processing method described in the embodiments as shown in FIG. 1, the object processing method described in the embodiments as shown in FIG. 3, the product information comparison method described in the embodiments as shown in FIG. 4, or the product information comparison method described in the embodiments as shown in FIG. 5. In such an embodiment, the computer program can be downloaded and installed from a network, and/or installed from a removable medium. When the computer program is executed by the processor, various functions defined in the system of the present disclosure are executed.

One skilled in the art can clearly understand that, for the convenience and simplicity of description, specific working processes of the systems, apparatuses and units described above can refer to corresponding processes in the aforementioned method embodiments, and will not be repeated herein.

The apparatus embodiments described above are only schematic, wherein units described as separate components may or may not be physically separated, and a component displayed as a unit may or may not be a physical unit, i.e., may be located in one place, or may be distributed on multiple network units. Some or all of the modules can be selected according to actual needs to achieve the purpose of the solutions of the embodiments of the present disclosure. One of ordinary skill in the art can understand and implement thereof without making any creative labor.

Through the description of the above implementation methods, one skilled in the art can clearly understand that each implementation method can be implemented by means of software plus a necessary general hardware platform, and apparently, can also be implemented by hardware. Based on this understanding, the essence of the above technical solutions or the parts that contribute to the existing technologies can be embodied in a form of a software product. Such computer software product can be stored in a computer-readable storage medium, such as ROM/RAM, a disk, an optical disk, etc., including a number of instructions for a computer device (which can be a personal computer, a server, or a network device, etc.) to execute the method described in each embodiment or some parts of the embodiments.

Finally, it should be noted that the above embodiments are only used to illustrate, rather than to limit, the technical solutions of the present disclosure. Although the present disclosure has been described in detail with reference to the aforementioned embodiments, one skilled in the art should understand that they can still modify the technical solutions described in the aforementioned embodiments, or make equivalent replacements for some of the technical features therein. However, these modifications or replacements do not deviate the essence of corresponding technical solutions from the spirit and scope of the technical solutions of the embodiments of the present disclosure.

The present disclosure can further be understood using the following clauses.

Clause 1: A method implemented by a computing device, comprising: providing a user interface and displaying search prompt information on the user interface;
generating a search instruction according to search information provided by a user to obtain object information corresponding to multiple first objects matching the search information from at least one object provision system based on the search instruction, and generate respective object prompt information based on the object information; displaying the respective object prompt information corresponding to the multiple first objects on the user interface; generating a first comparison instruction according to multiple target objects selected by the user, and comparing object information of the multiple target objects based on a first comparison instruction to generate comparison information; and displaying the comparison information on the user interface.

Clause 2: The method according to Clause 1, further comprising: displaying demand prompt information in the user interface in response to an acquisition operation for at least one target object; and sending an interaction request to an object provider providing the at least one target object based on the interaction request provided by the user.

Clause 3: The method according to Clause 1, wherein generating the first comparison instruction according to the multiple target objects selected by the user, and comparing the object information of the multiple target objects based on the first comparison instruction to generate the comparison information comprises: determining at least one first candidate object that is selected and searching at least one second candidate object that satisfies a first similarity condition with the at least one first candidate object from the at least one object provision system in response to a first object selection operation; and using the at least one first candidate object and the at least one second candidate object as the multiple target objects and generating the first comparison instruction, and comparing the object information of the multiple target objects based on the first comparison instruction to generate the comparison information.

Clause 4: The method according to Clause 2, further comprising: displaying corresponding selection prompt information for a target object belonging to a target object provision system in the user interface; determining the at least one target object that is selected in response to a second object selection operation triggered based on the selection prompt information; and displaying acquisition prompt information for the at least one target object in the user interface, wherein sending an interaction request to the object provider providing the at least one target object based on the interaction request provided by the user comprises: calling a target object provision system to send an interaction request to at least one object provider providing the at least one target object according to the interaction request provided by the user.

Clause 5: The method according to Clause 1, further comprising: displaying at least one feature keyword in the user interface; and generating an update instruction based on at least one target feature keyword selected by the user, to filter and select at least one first object matching the at least one target feature keyword from the multiple first objects based on the update instruction, and updating the user interface to display object prompt information of the at least one first object.

Clause 6: The method according to Clause 1, wherein the comparison information comprises respective feature data of at least one first attribute feature corresponding to the multiple target objects, and the method further comprises: displaying feature prompt information in the user interface; displaying multiple attribute features in the user interface in response to a feature selection operation; generating a second comparison instruction based on at least one second attribute feature selected by the user, to compare at least one second attribute feature of the multiple target objects based on the second comparison instruction; and updating the comparison information in the user interface based on feature data of the at least one second attribute feature.

Clause 7: The method according to Clause 1, wherein: generating the first comparison instruction according to the multiple target objects selected by the user, and comparing the object information of the multiple target objects based on the first comparison instruction to generate the comparison information comprises: generating the first comparison instruction according to the multiple target objects selected by the user, obtaining respective feature data of at least one first attribute feature corresponding to the multiple target objects based on the first comparison instruction, generating an evaluation result of any target object using the large model based on the respective feature data of the at least one first attribute feature corresponding to the multiple target objects, and using the respective feature data of the at least one first attribute feature corresponding to the multiple target objects and corresponding evaluation results as the comparison information; and displaying the comparison information on the user interface comprises: displaying the respective feature data of the at least one first attribute feature corresponding to the multiple target objects and the corresponding evaluation results on the user interface.

Clause 8: The method according to Clause 1, wherein: generating the first comparison instruction according to the multiple target objects selected by the user, and comparing the object information of the multiple target objects based on the first comparison instruction to generate the comparison information comprises: generating the first comparison instruction according to the multiple target objects selected by the user, obtaining respective feature data of at least one first attribute feature corresponding to the multiple target objects based on the first comparison instruction, generating cost profits according to sales prices and supply prices corresponding to the target objects when the at least one first attribute feature includes a cost feature, and using the cost profits as feature data of the cost feature, or using the sales prices corresponding to the target objects as feature data of a sales price feature when the at least one first attribute feature includes the sales price feature; and displaying the comparison information on the user interface comprises: displaying the respective feature data of the at least one first attribute feature corresponding to the multiple target objects on the user interface, and displaying corresponding cost profits when the at least one first attribute feature includes the cost feature, or displaying corresponding sales prices when the at least one first attribute feature includes the sales price feature.

Clause 9: The method according to Clause 1, wherein: generating the first comparison instruction according to the multiple target objects selected by the user, and comparing the object information of the multiple target objects based on the first comparison instruction to generate the comparison information comprises: generating the first comparison instruction according to the multiple target objects selected by the user, and obtaining respective feature data of at least one first attribute feature corresponding to the multiple target objects based on the first comparison instruction, generating table data based on the respective feature data of the at least one first attribute feature corresponding to the multiple target objects, setting a field value corresponding to a first attribute feature with same feature data corresponding to the multiple target objects as a predetermined mark symbol in the table data, and setting a field value corresponding to a first attribute feature with different feature data as feature data; and displaying the comparison information in the user interface comprises: displaying the table data in the user interface, and displaying the field value corresponding to the first attribute feature with the same feature data as the predetermined mark symbol in the table data, and displaying the field value corresponding to the first attribute feature with the different feature data as the corresponding feature data.

Clause 10: The method according to Clause 1, wherein generating the search instruction according to the search information provided by the user to obtain the object information corresponding to the multiple first objects matching the search information from the at least one object provision system based on the search instruction, and generate the respective object prompt information based on the object information comprise: obtaining the search information input by the user, and generating the search instruction according to the search information, extracting at least one search keyword from the search information using a large model based on the search instruction to obtain the object information corresponding to the multiple first objects matching the search information from the at least one object provision system, and generating the respective object prompt information based on the object information.

Clause 11: The method according to Clause 1, further comprising: saving the comparison information in response to the user's saving operation, and displaying viewing prompt information in the user interface; and detecting a viewing operation for the viewing prompt information, and displaying the comparison information in the user interface.

Clause 12: The method according to Clause 1 or 11, wherein: after displaying the comparison information on the user interface, the method further comprises: displaying newly added prompt information on the user interface; displaying the respective object prompt information corresponding to the multiple first objects on the user interface in response to a first new operation, and updating the multiple target objects and generating a third comparison instruction in response to an object reselection operation, so as to compare the object information of the multiple target objects based on the third comparison instruction to update the comparison information; or in response to a second new operation, obtaining an object link provided by the user, updating the multiple target objects based on an object indexed by the object link, and generating a fourth comparison instruction, so as to compare the object information of the multiple target objects based on the fourth comparison instruction to update the comparison information.

Clause 13: An object processing method, further comprising: obtaining search information provided by a user; obtaining respective object information corresponding to multiple first objects matching the search information from at least one object provision system, and generating object prompt information based on the object information; sending the respective object prompt information corresponding to the multiple first objects to the user; determining the multiple target objects selected by the user; and comparing object information of the multiple target objects to generate comparison information.

Clause 14: The method according to Clause 13, further comprising: obtaining an acquisition request for at least one target object; sending demand prompt information to a client; sending an interaction request to an object provider that provides the at least one target object based on an interaction request provided by the user.

Clause 15: The method according to Clause 14, wherein the comparison information comprises feature data of at least one first attribute feature respectively corresponding to the multiple target objects, and the method further comprises: sending multiple attribute features to the client; in response to a feature selection request sent by the client, generating a second comparison instruction based on at least one second attribute feature selected by the user, so as to compare at least one second attribute feature of the multiple target objects based on the second comparison instruction; and updating the comparison information based on the feature data of the at least one second attribute feature.

Clause 16: The method according to Clause 15, further comprising: based on the feature data of the at least one first attribute feature respectively corresponding to the multiple target objects or feature data respectively corresponding to the at least one first attribute feature and the at least one second attribute feature, using a large model to generate an evaluation result of any target object, and using evaluation results respectively corresponding to the multiple target objects as the comparison information; when the at least one first attribute feature or the at least one second attribute feature includes a cost feature, generating cost profits according to sales prices and supply prices respectively corresponding to the target objects, and using the cost profits as feature data of the cost feature; and when the at least one first attribute feature or the at least one second attribute feature includes a sales price feature, using the sales prices corresponding to the target object as feature data of the sales price feature.

Clause 17: A method for comparing product information, comprising: providing a user interface and displaying search prompt information on the user interface; generating a search instruction according to search information provided by a user, so as to obtain respective product information corresponding to multiple first products matching the search information from at least one e-commerce system based on the search instruction, and generate respective product prompt information based on the product information; displaying the product prompt information corresponding to the multiple first products on the user interface; generating a first comparison instruction according to the multiple target products selected by the user, so as to generate comparison information by comparing the product information of the multiple target products based on the first comparison instruction; and displaying the comparison information on the user interface.

Clause 18: A method for comparing product information, comprising: obtaining search information provided by a user; obtaining respective product information corresponding to multiple first products matching the search information from at least one e-commerce system, and generating respective product prompt information based on the respective product information; sending the respective product prompt information corresponding to the multiple first products to the user; determining the multiple target products selected by the user; and comparing product information of the multiple target products to generate comparison information.

Clause 19: A computing device, comprising: a processing component, and a storage component, wherein: the storage component stores one or more computer instructions; the one or more computer instructions are used to be called and executed by the processing component to implement the object processing method according to any one of Clauses 1 to 12, or the object processing method according to any one of Clauses 13 to 16, or the product information comparison method according to Clause 17, or the product information comparison method according to Clause 18.

Clause 20: A computer-readable storage medium, wherein a computer program is stored thereon, and the computer program, when executed by the processing component, implements the object processing method according to any one of Clauses 1 to 12, or the object processing method according to any one of Clauses 13 to 16, or the product information comparison method according to Clause 17, or the product information comparison method according to Clause 18.

Clause 21: A computer program product comprising: a computer program/instruction, wherein the computer program/instruction, when executed by a processing component, implements the object processing method according to any one of Clauses 1 to 12, or the object processing method according to any one of Clauses 13 to 16, or the product information comparison method according to Clause 17, or the product information comparison method according to Clause 18.

## Claims

1. A method implemented by a computing device, comprising:
providing a user interface and displaying search prompt information on the user interface;
generating a search instruction according to search information provided by a user to obtain object information corresponding to multiple first objects matching the search information from at least one object provision system based on the search instruction, and generate respective object prompt information based on the object information;
displaying the respective object prompt information corresponding to the multiple first objects on the user interface;
generating a first comparison instruction according to multiple target objects selected by the user, and comparing object information of the multiple target objects based on a first comparison instruction to generate comparison information; and
displaying the comparison information on the user interface.

2. The method according to claim 1, further comprising:
displaying demand prompt information in the user interface in response to an acquisition operation for at least one target object; and
sending an interaction request to an object provider providing the at least one target object based on the interaction request provided by the user;
optionally the method further comprises: displaying corresponding selection prompt information for a target object belonging to a target object provision system in the user interface; determining the at least one target object that is selected in response to a second object selection operation triggered based on the selection prompt information; and displaying acquisition prompt information for the at least one target object in the user interface.

3. The method according to claims 2, wherein sending the interaction request to the object provider providing the at least one target object based on the interaction request provided by the user comprises:
calling a target object provision system to send the interaction request to at least one object provider providing the at least one target object according to the interaction request provided by the user.

4. The method according to any one of claims 1 to 3, wherein generating the first comparison instruction according to the multiple target objects selected by the user, and comparing the object information of the multiple target objects based on the first comparison instruction to generate the comparison information comprises:
determining at least one first candidate object that is selected and searching at least one second candidate object that satisfies a first similarity condition with the at least one first candidate object from the at least one object provision system in response to a first object selection operation; and
using the at least one first candidate object and the at least one second candidate object as the multiple target objects and generating the first comparison instruction, and comparing the object information of the multiple target objects based on the first comparison instruction to generate the comparison information.

5. The method according to any one of claims 1 to 4, further comprising:
displaying at least one feature keyword in the user interface; and
generating an update instruction based on at least one target feature keyword selected by the user, to filter and select at least one first object matching the at least one target feature keyword from the multiple first objects based on the update instruction, and updating the user interface to display corresponding object prompt information of the at least one first object.

6. The method according to any one of claims 1 to 5, wherein the comparison information comprises respective feature data of at least one first attribute feature corresponding to the multiple target objects, and the method further comprises:
displaying feature prompt information in the user interface;
displaying multiple attribute features in the user interface in response to a feature selection operation;
generating a second comparison instruction based on at least one second attribute feature selected by the user, to compare at least one second attribute feature of the multiple target objects based on the second comparison instruction; and
updating the comparison information in the user interface based on feature data of the at least one second attribute feature.

7. The method according to any one of claims 1 to 6, wherein generating the first comparison instruction according to the multiple target objects selected by the user, and comparing the object information of the multiple target objects based on the first comparison instruction to generate the comparison information comprises:
generating the first comparison instruction according to the multiple target objects selected by the user, obtaining respective feature data of at least one first attribute feature corresponding to the multiple target objects based on the first comparison instruction, generating an evaluation result of any target object using the large model based on the respective feature data of the at least one first attribute feature corresponding to the multiple target objects, and using the respective feature data of the at least one first attribute feature corresponding to the multiple target objects and corresponding evaluation results as the comparison information;
optionally wherein displaying the comparison information on the user interface comprises: displaying the respective feature data of the at least one first attribute feature corresponding to the multiple target objects and the corresponding evaluation results on the user interface.

8. The method according to any one of claims 1 to 7, wherein generating the first comparison instruction according to the multiple target objects selected by the user, and comparing the object information of the multiple target objects based on the first comparison instruction to generate the comparison information comprises:
generating the first comparison instruction according to the multiple target objects selected by the user, obtaining respective feature data of at least one first attribute feature corresponding to the multiple target objects based on the first comparison instruction, generating cost profits according to sales prices and supply prices corresponding to the target objects when the at least one first attribute feature includes a cost feature, and using the cost profits as feature data of the cost feature, or using the sales prices corresponding to the target objects as feature data of a sales price feature when the at least one first attribute feature includes the sales price feature;
optionally wherein displaying the comparison information on the user interface comprises: displaying the respective feature data of the at least one first attribute feature corresponding to the multiple target objects on the user interface, and displaying corresponding cost profits when the at least one first attribute feature includes the cost feature, or displaying corresponding sales prices when the at least one first attribute feature includes the sales price feature.

9. The method according to any one of claims 1 to 8, wherein generating the first comparison instruction according to the multiple target objects selected by the user, and comparing the object information of the multiple target objects based on the first comparison instruction to generate the comparison information comprises:
generating the first comparison instruction according to the multiple target objects selected by the user, and obtaining respective feature data of at least one first attribute feature corresponding to the multiple target objects based on the first comparison instruction, generating table data based on the respective feature data of the at least one first attribute feature corresponding to the multiple target objects, setting a field value corresponding to a first attribute feature with same feature data corresponding to the multiple target objects as a predetermined mark symbol in the table data, and setting a field value corresponding to a first attribute feature with different feature data as feature data;
optionally wherein displaying the comparison information in the user interface comprises: displaying the table data in the user interface, and displaying the field value corresponding to the first attribute feature with the same feature data as the predetermined mark symbol in the table data, and displaying the field value corresponding to the first attribute feature with the different feature data as the corresponding feature data.

10. The method according to any one of claims 1 to 9, wherein generating the search instruction according to the search information provided by the user to obtain the object information corresponding to the multiple first objects matching the search information from the at least one object provision system based on the search instruction, and generate the respective object prompt information based on the object information comprise:
obtaining the search information input by the user, and generating the search instruction according to the search information, extracting at least one search keyword from the search information using a large model based on the search instruction to obtain the object information corresponding to the multiple first objects matching the search information from the at least one object provision system, and generating the respective object prompt information based on the object information.

11. The method according to claim any one of claims 1 to 10, further comprising:
saving the comparison information in response to the user's saving operation, and displaying viewing prompt information in the user interface; and
detecting a viewing operation for the viewing prompt information, and displaying the comparison information in the user interface.

12. The method according to any one of claims 1 to 11, wherein: after displaying the comparison information on the user interface, the method further comprises:
displaying newly added prompt information on the user interface;
displaying the respective object prompt information corresponding to the multiple first objects on the user interface in response to a first new operation, and updating the multiple target objects and generating a third comparison instruction in response to an object reselection operation, so as to compare the object information of the multiple target objects based on the third comparison instruction to update the comparison information; or
in response to a second new operation, obtaining an object link provided by the user, updating the multiple target objects based on an object indexed by the object link, and generating a fourth comparison instruction, so as to compare the object information of the multiple target objects based on the fourth comparison instruction to update the comparison information.

13. One or more non-transitory media storing executable instructions that, when executed by one or more processors, cause the one or more processors to perform operations comprising:
obtaining search information provided by a user;
obtaining respective object information corresponding to multiple first objects matching the search information from at least one object provision system, and generating object prompt information based on the object information;
sending the respective object prompt information corresponding to the multiple first objects to the user;
determining the multiple target objects selected by the user; and
comparing object information of the multiple target objects to generate comparison information;
optionally the acts further comprises: obtaining an acquisition request for at least one target object; sending demand prompt information to a client; sending an interaction request to an object provider that provides the at least one target object based on an interaction request provided by the user.

14. The one or more non-transitory media according to claim 13, wherein the comparison information comprises feature data of at least one first attribute feature respectively corresponding to the multiple target objects, and the method further comprises:
sending multiple attribute features to the client;
in response to a feature selection request sent by the client, generating a second comparison instruction based on at least one second attribute feature selected by the user, so as to compare at least one second attribute feature of the multiple target objects based on the second comparison instruction; and
updating the comparison information based on the feature data of the at least one second attribute feature.

15. An apparatus comprising:
one or more processors; and
memory storing executable instructions that, when executed by the one or more processors, cause the one or more processors to perform operations comprising:
providing a user interface and displaying search prompt information on the user interface;
generating a search instruction according to search information provided by a user, so as to obtain respective product information corresponding to multiple first products matching the search information from at least one e-commerce system based on the search instruction, and generate respective product prompt information based on the product information;
displaying the product prompt information corresponding to the multiple first products on the user interface;
generating a first comparison instruction according to the multiple target products selected by the user, so as to generate comparison information by comparing the product information of the multiple target products based on the first comparison instruction; and
displaying the comparison information on the user interface.
